# EUROPEAN PATENT APPLICATION

(11) **EP 2 712 241 A1**
(43) Date of publication of application: **26.03.2014**
(21) Application number: 11865861.6
(22) Date of filing: 17.05.2011
(51) Int. Cl.: H04W 52/02, H04B 1/04, H04M 1/73, H04W 88/02

(54) **WIRELESS MOBILE COMMUNICATION SYSTEM, WIRELESS BASE STATION DEVICE, MOBILE TERMINAL DEVICE, AND WIRELESS COMMUNICATION METHOD IN WIRELESS MOBILE COMMUNICATION SYSTEM**

(71) Applicant: Fujitsu Limited, Kawasaki-shi, Kanagawa 211-8588 (JP)
(72) Inventor: HO Cong Huan, Kawasaki-shi Kanagawa 211-8588 (JP); MURAKAMI Norio, Kawasaki-shi Kanagawa 211-8588 (JP); NAKATSUJI Mitsuru, Kawasaki-shi Kanagawa 211-8588 (JP)
(74) Representative: Stebbing, Timothy Charles
(86) International application number: PCT/JP2011/061335
(87) International publication number: WO 2012/157080

(57) **Abstract**

A radio mobile communication system including: a radio base station apparatus; and a mobile terminal apparatus, wherein radio communication is performed between the radio base station apparatus and the mobile terminal apparatus, the radio base station apparatus includes: a first transmission unit which transmits a first notification signal to notify a shift to a first mode; and a first mode switching control unit which transmits the first notification signal and switches to the first mode in which the first transmission unit is shifted to a condition of a suspension state, and the mobile terminal apparatus includes: a second mode switching control unit which switches to a second mode in which power of the mobile terminal apparatus is in an ON state and power consumption is smaller than in an outside coverage area mode, on receiving the first communication signal.

## Description

### TECHNICAL FIELD

The embodiments discussed herein are related to a radio mobile communication system, a radio base station apparatus, a mobile terminal apparatus, and a radio communication method in the radio mobile communication system.

### BACKGROUND ART

At present, a radio mobile communication system such as a mobile telephone system and a wireless LAN (Local Area Network) is widely used. Further, in order to further improve communication speed and communication capacity in the field of radio mobile communication, continuous discussion is in progress on next-generation communication technology. For example, standardization of LTE, LTE-Advanced etc. is completed or currently under study as next-generation radio mobile communication technology.

Such a radio mobile communication system includes, for example, a control apparatus (hereinafter "control station"), a radio base station apparatus (hereinafter "base station") and a mobile terminal device (hereinafter "terminal"). The base station transmits a radio wave to a certain service area to enable radio communication with the terminal. Also, the terminal receives the radio wave transmitted from the base station and issues a connection request to the base station, to enable establishment of a radio communication connection with the base station. Further, by controlling a plurality of base stations, the control station can communicate with another communication system in another network etc.

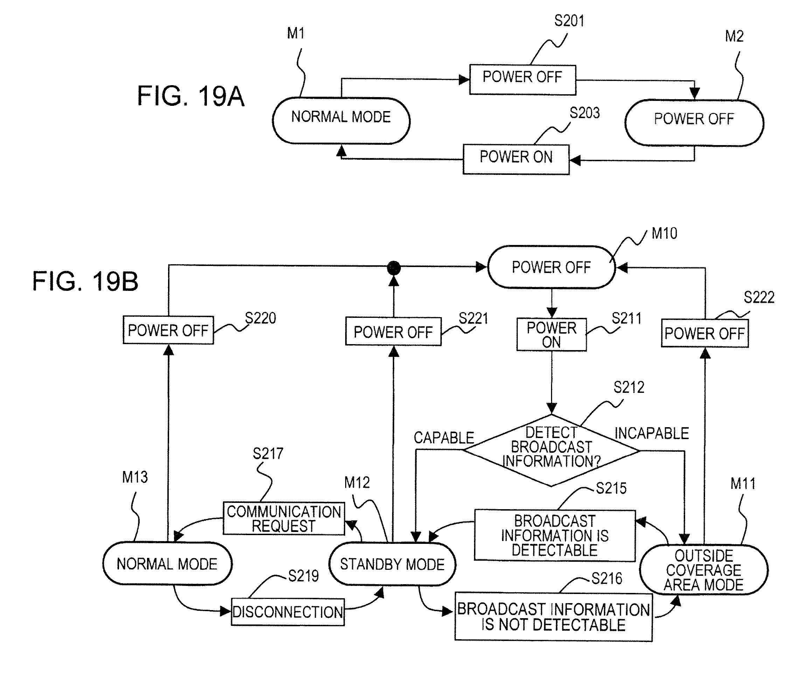

Here, the terminal and the base station can perform processing including radio communication while transitioning among various states, respectively. FIG. 19A illustrates an example of a state transition diagram of the base station, and FIG. 19B illustrates an example of a state transition portion of the terminal, respectively.

The base station includes, for example, two states which are a normal mode (M1) and power OFF (M2). The normal mode (M1) signifies, for example, a state in which the base station continues to transmit broadcast information. The broadcast information includes, for example, an operator (or carrier) identification code, a frequency bandwidth, a base station identification number (such as cell ID), etc. The terminal, on receiving the broadcast information, performs authentication procedure and location registration to the base station on the basis of the broadcast information, to enable establishing a connection with the base station. The base station in the normal mode (M1), on switching off the power (S201), can shift (or transition) to the power OFF (M2) state.

The power OFF (M2) signifies, for example, a state in which the power of the base station is OFF and the base station is unable to transmit or receive a radio signal between with the terminal. By switching on the power (S203), the base station in the power OFF (M2) can shift to the normal mode (M1).

On the other hand, the terminal includes four states, which are power OFF (M10), an outside coverage area mode (M11), a standby mode (M12) and a communication mode (M13), and can transition among each state.

The power OFF (M10) signifies, for example, a state in which the power of the terminal is OFF. The terminal in the power OFF (M10) state is unable to transmit or receive a radio signal between with the base station, and is unable to perform radio communication.

The outside coverage area mode (M11) signifies, for example, a state in which the terminal is unable to detect broadcast information transmitted from the base station, and therefore is continuously retrieving identification codes, radio communication methods and radio frequency bandwidths of all operators with which the terminal is compatible. For example, when the terminal is located outside the service area of the base station and is unable to receive broadcast information, the terminal shifts to the outside coverage area mode and performs such retrieval. As radio communication methods to be retrieved by the terminal, there are the W-CDMA (Wideband Code Division Multiple Access) method, the GSM (Global System for Mobile Communications) method and other international roaming methods. Further, an operator (carrier) to be retrieved by the terminal is, for example, a common carrier. As such, the terminal shifted to the outside coverage area mode (M11) is configured to retrieve identification codes, radio communication methods and radio frequency bandwidths of all operators with which the own terminal is compatible.

The state of the standby mode (M12) signifies, for example, a state in which broadcast information transmitted from the base station can be detected and communication can be established at any time. However, the terminal in the standby mode (M12) is, for example, in a state in which the terminal can detect broadcast information but does not perform processing relative to the broadcast information.

The state of the communication mode (M13) signifies, for example, a state in which the terminal establishes a connection with the base station and communicates with the base station. By radio communicating with the base station, the terminal in the communication mode (M13) can transmit a radio signal to the base station, and can receive a radio signal from the base station.

Describing on the state transitions depicted in FIGS. 19A and 19B, in the normal mode (M1), the base station continues to transmit broadcast information. The broadcast information includes, for example, an operator identification code, a frequency bandwidth and an identification number (cell ID etc.) of the own station. The terminal switches on the power from the power OFF (M10) state (S211), and if the terminal fails to detect broadcast information transmitted from the base station ("Incapable" in S212), the terminal shifts to the outside coverage area mode (M11). The terminal in the outside coverage area mode (M11) can shift to the standby mode (M12) when the broadcast information is received successfully (S215).

On the other hand, when the terminal successfully detects broadcast information ("capable" in S212), for example, the terminal transmits an RACH (Random Access Channel) signal to the base station, and thereafter performs processing such as authentication procedure and location registration, and shifts to the standby mode (M12).

When a connection is requested from the user, the terminal in the standby mode (M12) transmits a connection request signal to the base station (S217) and transitions to the communication mode (M13), so as to enable establishment of a communication channel. Then, on completion of communication, the terminal performs disconnection processing (S219) and shifts to the standby mode (M12).

In addition, when the power is switched off during the outside coverage area mode (M11), the standby mode (M12) and the communication mode (M13) (S220, S221, S222), the terminal shifts to the power OFF (M10) state.

As such, the terminal cam perform communication while transitioning among the states, and in some cases, the terminal may switch over a base station for connection by handover. For example, when the signal power of a base station currently in connection falls down to a first threshold or lower, and also the signal power of an adjacent base station is higher than a second threshold, the terminal executes handover to the adjacent base station. On the other hand, for example, when the signal power of the base station in connection is the first threshold or lower and the signal power of the adjacent base station is lower than the second threshold, the terminal fails to execute the handover, and therefore, and fails to receive broadcast information from the two base stations. In such a case, the terminal shifts to the outside coverage area mode (M11). For example, such a case as the terminal shifts to the outside coverage area mode (M11) may occur when the terminal moves outside the service area of the base station and comes to be located outside the service area of the adjacent base station.

Recently, the terminal is becoming capable of receiving a roaming service between operators, compatible with a plurality of radio communication methods, and further capable of radio communication using a plurality of frequency bandwidths. Therefore, when the terminal shifts to the outside coverage area mode (M11), the terminal repeats retrieving another operator, another radio communication method, another frequency bandwidth, etc. with which the terminal is compatible, as described above. As a result, there may be cases when power consumption of the terminal in the outside coverage area mode (M11) becomes larger than the power consumption of the terminal in the standby mode (M12).

Meanwhile, in regard to the base station, to achieve 100% coverage of population, not only installation in a densely populated area such as a city, by installing in a mountain village, a hill road, an isolated island, etc., a radio mobile communication service is available in such a district. However, if a base station is installed in such an area having a lower population density than an area of a constant population density, and is operated continuously, in some cases, a standby time may become longer than a communication time with a terminal, causing wasteful power consumption in the base station.

Then, as a technique to reduce power consumption in the base station, there is such a technique as follows, for example. That is, when there is no request for call connection for a predetermined time from the last communication time, the base station brings a transmitter into a suspension state, and when a terminal originates a call, the terminal transmits a transmission start request signal to the base station, so as to restart the base station.

### CITATION LIST

### PATENT LITERATURE

Patent literature 1: Japanese Laid-open Patent Publication No. 2002-152129

### SUMMARY OF INVENTION

### PROBLEMS TO BE SOLVED BY THE INVENTION

However, according to the above-mentioned technique, the base station become unable to transmit broadcast information when the base station brings the transmitter into the suspension state. Since a terminal located in the coverage area of such a base station is unable to receive broadcast information, the terminal shifts to the outside coverage area mode (M11) (for example, "Incapable" in S212, S216 in FIG. 19B, or the like). When shifting to the outside coverage area mode (M11), the terminal retrieves all of compatible operator identification codes, radio communication methods and radio frequency bandwidths. Therefore, in the terminal shifted to the outside coverage area mode (M11), power consumption becomes larger than, for example, in the case of the standby mode (M12), as described above.

Further, since the above-mentioned technique does not mention processing for handover, for example, if the terminal located in the service area of an adjacent base station moves to a base station in the suspension state, the terminal is unable to transmit a transmission start request signal to the base station in the suspension state to restart. In this case, because no handover-target base station exists, the communication of a terminal in the communication mode (M13) is disconnected, and a terminal in the standby mode (M12) shifts to the outside coverage area mode (M11). The terminal shifted to the outside coverage area mode (M11) retrieves all of operator identification codes, radio communication methods and radio frequency bandwidths with which the terminal is compatible, as described above. Therefore, the power consumption of the terminal in the outside coverage area mode (M11) becomes larger, as compared to a case when the terminal is in the standby mode (M12), for example. Further, because of communication disconnection, the terminal becomes unable to continue radio communication.

Further, in the above-mentioned technique, when the terminal moves to a base station in a suspension state, the base station is unable to transmit a reference signal because of being in the suspension state, and therefore, the terminal is unable to synchronize with the base station. When the terminal is unable to synchronize with the base station, the terminal is unable to detect broadcast information transmitted from the base station, and therefore, the terminal shifts to the outside coverage area mode (M11). On the other hand, when the terminal moves to the outside of the service area of the base station, the terminal is unable to receive a reference signal transmitted from the base station, and therefore, the terminal is unable to synchronize with the base station. In this case also, the terminal is unable to detect broadcast information from the base station, and therefore the terminal shifts to the outside coverage area mode (M11). As such, it is not possible to distinguish whether the terminal is located in the base station placed in the suspension state or the terminal is located outside the service area, and therefore, the terminal shifts to the outside coverage area mode (M11), which causes larger power consumption than, for example, in the standby mode (M12). Further, due to incapability of such a distinction, for example, the base station and the terminal are unable to discriminate whether or not communication is possible.

Accordingly, it is an object in one aspect of the present invention to provide a radio mobile communication system, a radio base station apparatus, a mobile terminal apparatus and a radio communication method in the radio mobile communication system, respectively reducing power consumption in the radio base station apparatus and the mobile terminal apparatus.

### MEANS FOR SOLVING THE PROBLEMS

According to an aspect of the embodiments, a radio mobile communication system including: a radio base station apparatus; and a mobile terminal apparatus, wherein radio communication is performed between the radio base station apparatus and the mobile terminal apparatus, the radio base station apparatus includes: a first transmission unit which transmits a first notification signal to notify a shift to a first mode; and a first mode switching control unit which transmits the first notification signal and switches to the first mode in which the first transmission unit is shifted to a condition of a suspension state, and the mobile terminal apparatus includes: a second mode switching control unit which switches to a second mode in which power of the mobile terminal apparatus is in an ON state and power consumption is smaller than in an outside coverage area mode, on receiving the first communication signal.

### ADVANTAGEOUS EFFECTS OF THE INVENTION

It is possible to provide a radio mobile communication system, a radio base station apparatus, a mobile terminal apparatus and a radio communication method in the radio mobile communication system which are configured to respectively reduce power consumption in the radio base station apparatus and the mobile terminal apparatus.

### BRIEF DESCRIPTION OF DRAWINGS

FIG. 1 is a diagram illustrating a configuration example of a radio mobile communication system.
FIG. 2 is a diagram illustrating a configuration example of a radio mobile communication system.
FIGS. 3A and 3B are diagrams illustrating configuration examples of a base station apparatus and a mobile terminal, respectively.
FIG. 4 is a diagram illustrating an example of state transition in a base station apparatus.
FIG. 5 is a diagram illustrating an example of state transition in a mobile terminal device.
FIG. 6 is a diagram illustrating a configuration example of a base station apparatus.
FIG. 7 is a diagram illustrating a configuration example of a mobile terminal device.
FIG. 8 is a sequence diagram illustrating an operation example of a radio mobile communication system.
FIGS. 9A and 9B are diagrams respectively illustrating examples of signals transmitted and received at a radio base station apparatus and a mobile terminal apparatus.
FIGS. 10A and 10B are diagrams illustrating examples of a signal transmitted from a radio base station apparatus to a terminal, and a signal transmitted from a radio base station apparatus to an adjacent base station, respectively.
FIG. 11 is a sequence diagram illustrating an operation example of a radio mobile communication system.
FIGS. 12A and 12B are diagrams respectively illustrating examples of signals transmitted and received at a radio base station apparatus and a terminal.
FIG. 13 is a sequence diagram illustrating an operation example of a radio mobile communication system.
FIGS. 14A and 14B are diagrams respectively illustrating examples of signals transmitted and received at a radio base station apparatus and a terminal.
FIG. 15 is a sequence diagram illustrating an operation example of a radio mobile communication system.
FIGS. 16A and 16B are diagrams respectively illustrating examples of signals transmitted and received at a radio base station apparatus and a terminal.
FIG. 17 is a sequence diagram illustrating an operation example of a radio mobile communication system.
FIGS. 18A and 18B are diagrams illustrating configuration examples of a radio base station apparatus and a mobile terminal apparatus, respectively.
FIGS. 19A and 19B are diagrams illustrating examples of state transition of a radio base station apparatus and state transition of a mobile terminal apparatus, respectively.

### DESCRIPTION OF EMBODIMENTS

Hereafter, embodiments of the present invention will be described in detail by reference to the drawings.

### [First embodiment]

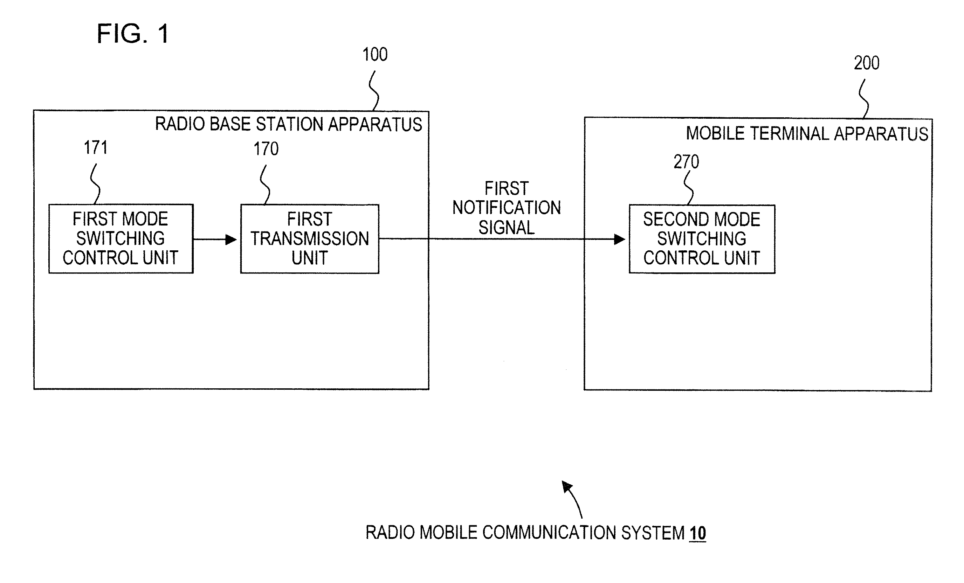

FIG. 1 is a diagram illustrating a configuration example of a radio mobile communication system 10 according to the first embodiment. The radio mobile communication system 10 includes a radio base station apparatus 100 and a mobile terminal apparatus 200.

The radio base station apparatus 100 includes a first transmission unit 170 and a first mode switching control unit 171. The first transmission unit 170 transmits a first notification signal for the notification of a shift to a first mode. Further, after transmitting the first notification signal, the first mode switching control unit 171 switches to the first mode in which the first transmission unit 170 is shifted to a suspension state.

On the other hand, the mobile terminal apparatus 200 includes a second mode switching control unit 270. The second mode switching control unit 270, when receiving the first notification signal from the mobile base station apparatus 100, is switched to a second mode in which the power of the mobile terminal apparatus 200 is ON and power consumption thereof is smaller than in the outside coverage area mode.

In the mobile base station apparatus 100, on shifting to the first mode after the transmission of the first notification signal, the first transmission unit 170 is shifted to the suspension state, and therefore, it is possible to reduce power consumption as compared to the normal mode in which the first transmission unit 170 does not be shifted to the suspension mode.

Meanwhile, the mobile terminal apparatus 200 is switched to the second mode on receiving the first notification signal. When the mobile terminal apparatus 200 shifts to the second mode, it is possible to reduce power consumption because the power consumption is smaller than in the outside coverage area mode.

As such, the radio mobile communication system 10 can reduce power consumption in both the mobile base station apparatus 100 and the mobile terminal apparatus 200.

### [Second embodiment]

### <Overall configuration example>

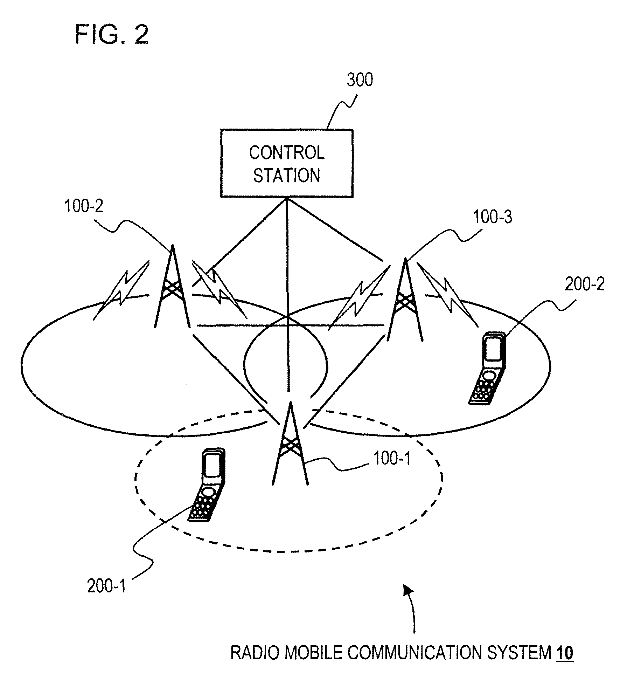

FIG. 2 is a diagram illustrating a configuration example of a radio mobile communication system 10 according to the second embodiment. The radio mobile communication system 10 includes radio base station apparatuses (hereinafter, "base stations") 100-1 to 100-3, mobile terminal devices (hereinafter, "terminals") 200-1, 200-2 and a control apparatus (hereinafter, "control station") 300.

The base stations 100-1 to 100-3 are radio communication apparatuses that perform radio communication through radio connection with the terminals 200-1, 200-2. The base stations 100-1 to 100-3 can provide various services such as voice communication and video distribution to the terminals 200-1, 200-2.

On the other hand, the terminals 200-1, 200-2 are radio communication apparatuses which perform radio communication through radio connection with the base stations 100-1 to 100-3, and are mobile telephone sets, information mobile terminal apparatuses, etc. The terminals 200-1, 200-2 can receive data signals (hereinafter, "data") from the base stations 100-1 to 100-3, and also can transmit data to the base stations 100-1 to 100-3.

In the example depicted in FIG. 2, the base station 100-3 performs radio communication with the terminal 200-2. Further, the base station 100-1 is unable to transmit a radio signal because of being in the suspension mode, and the terminal 200-1 is in a state of a station suspension mode. Details of the suspension mode and the station suspension mode will be described later.

In the present description, communication links from the base stations 100-1 to 100-3 to the terminals 200-1, 200-2 are referred to as downlinks (DL), and communication links from the terminals 200-1, 200-2 to the base stations 100-1 to 100-3 are referred to as uplinks (UL).

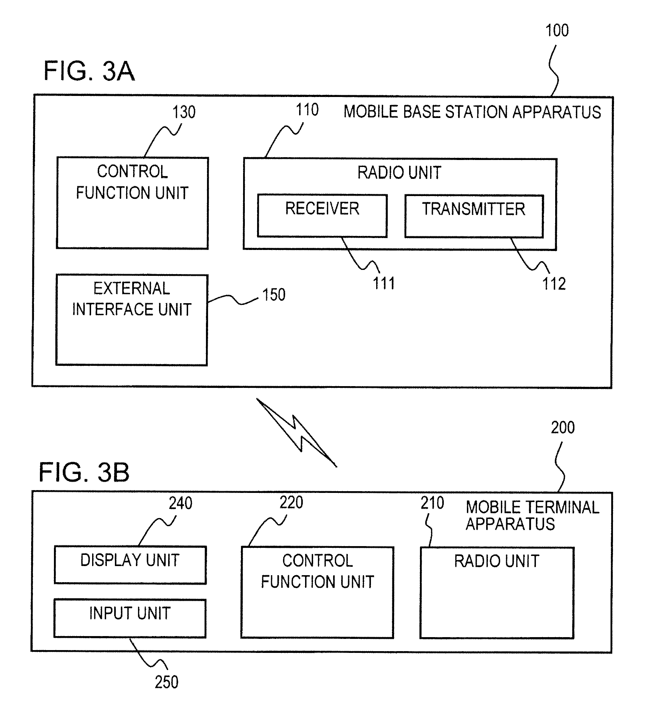

FIG. 3A is a diagram illustrating a configuration example of a base station 100, and FIG. 3B is a diagram illustrating a configuration example of a terminal 200. Incidentally, the base stations 100-1 to 100-3 illustrated in FIG. 2 are of identical configuration and each base station 100-1 to 100-3 is described as the base station 100 unless otherwise specified. Also, the same is applicable to the terminal 200, namely, the terminals 200-1, 200-2 are of identical configuration and each terminal 200-1, 200-2 is described as the terminal 200.

The base station 100 includes a radio unit 110, a control function unit 130 and an external interface unit 150. Further, the radio unit 110 includes a receiver 111 and a transmitter 112.

Also, the terminal 200 includes a radio unit 210, a control function unit 220, a display unit 240 and an input unit 250.

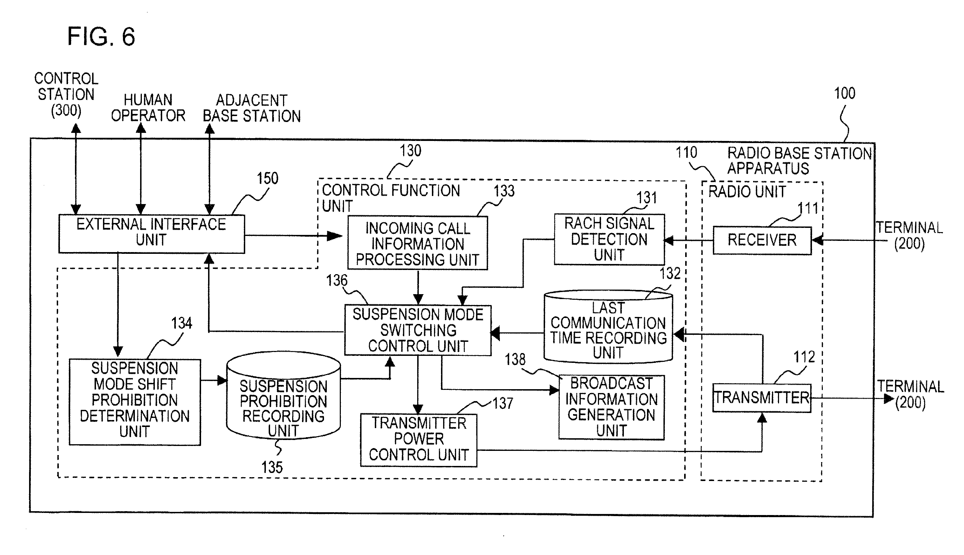

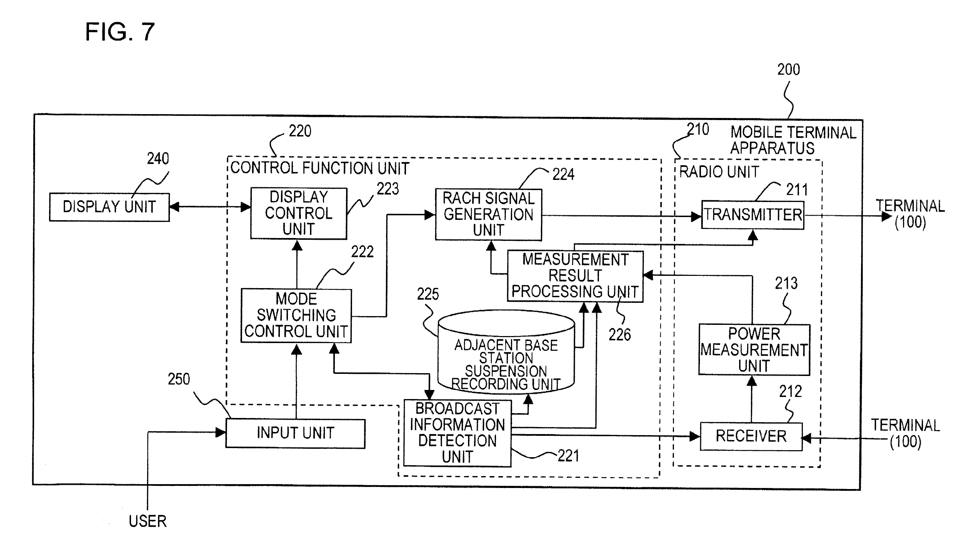

Incidentally, configuration examples of the base station 100 and the terminal 200 are represented in FIG. 6 and FIG. 7, respectively, and the description on the configuration examples of the base station 100 and the terminal 200 will be made later by reference to FIG. 6 and FIG. 7.

In the present second embodiment, as a mode of the base station 100, a suspension mode is further provided. Also, as a mode of the terminal 200, a station suspension mode is further provided. By that the base station 100 shifts (or transitions) to the suspension mode and the terminal 200 shifts to the station suspension mode, it is possible to respectively reduce power consumption in the base station 100 and the terminal 200. Therefore, examples of state transition in the base station 100 and the terminal 200 including the above modes will be described first.

### <State transition in the base station 100>

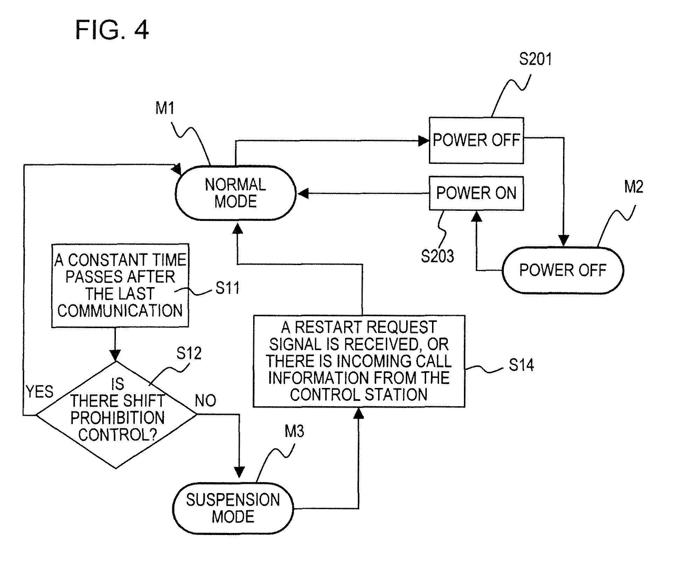

First, an example of state transition in the base station 100 will be described. FIG. 4 is a diagram illustrating an example of state transition in the base station 100 according to the second embodiment.

As illustrated in FIG. 4, a suspension mode (M3) is provided in the base station 100. The suspension mode (M3) signifies a state in which the transmitter 112 in the radio unit 110 of the base station 100 is not in operation (or in a power OFF condition). At this time, the base station 100 is configured to suspend the transmission of broadcast information, so as not to transmit the broadcast information to the inside of the service area. Additionally, in the base station 100 placed in the suspension mode (M3), the receiver 111 in the radio unit 110, the external interface unit 150 and a portion of the control function unit 130 are in operation, so as to be continuously operable even in the suspension mode (M3). In the base station 100 placed in the suspension mode (M3), because the transmitter 112 of the radio unit 100 is not in operation, power consumption can be reduced as compared to the normal mode (M1) in which the transmitter 112 is in operation.

As illustrated in FIG. 4, the base station 100 can shift from the normal mode (M1) to the suspension mode (M3). For example, the base station 100 can shift to the suspension mode (M3), when a constant time passes from the last communication (S11) and no shift prohibition control is made by the control station 300 etc. ("No" in S12).

The shift prohibition control signifies control to prohibit shift to the suspension mode (M3), for example. The control function unit 130 controls the base station 100 not to shift to the suspension mode (M3) when a control signal representing shift prohibition is input from the control station 300 through the external interface unit 150, for example. For example, when an event is held in the service area of the base station 100, it is possible to prohibit shift to the suspension mode (M3) even after the lapse of a certain time after the last communication. Also, the set shift prohibition control can be canceled by the control station 300 or the base station 100. For example, on receipt of a cancellation signal from the external interface unit 150, the control function unit 130 performs control to cancel the shift prohibition to the suspension mode (M3).

On the other hand, when there is shift prohibition control ("Yes" in S12), the base station 100 maintains a state of the normal mode (M1).

Also, when the base station 100 shifted to the suspension mode (M3) receives either a restart request signal from the terminal 200 or incoming call information destined to the terminal 200 from the control station 300 (S14), the base station 100 restarts and shifts to the normal mode (M1). The restart request signal signifies, for example, a signal transmitted from the terminal 200 to the base station 100 in order to restart the base station in the suspension mode (M3). By the transmission of the restart request signal from the terminal 200, the base station 100 in the suspension mode (M3) can be restarted to shift from the suspension mode (M3) to the normal mode (M1). Further, there is a case when the base station 100 in the suspension mode (M3) receives from the control station 300 incoming call information destined to a terminal 200 located in the coverage area. In such a case also, the base station 100 can shift from the suspension mode (M3) to the normal mode (M1), and transmit a data signal (hereinafter, "data") etc. to the terminal 200 located in the coverage area. Additionally, because most portions other than the transmitter 112 are in operation, for example, the base station 100 in the suspension mode (M3) can receive a restart request signal transmitted from the terminal 200 and can also receive incoming call information transmitted from the control station 300.

Incidentally, in regard to the state transition of the base station 100, other portions are identical to FIG. 19A and therefore, description is omitted.

### <State transition in the terminal 200>

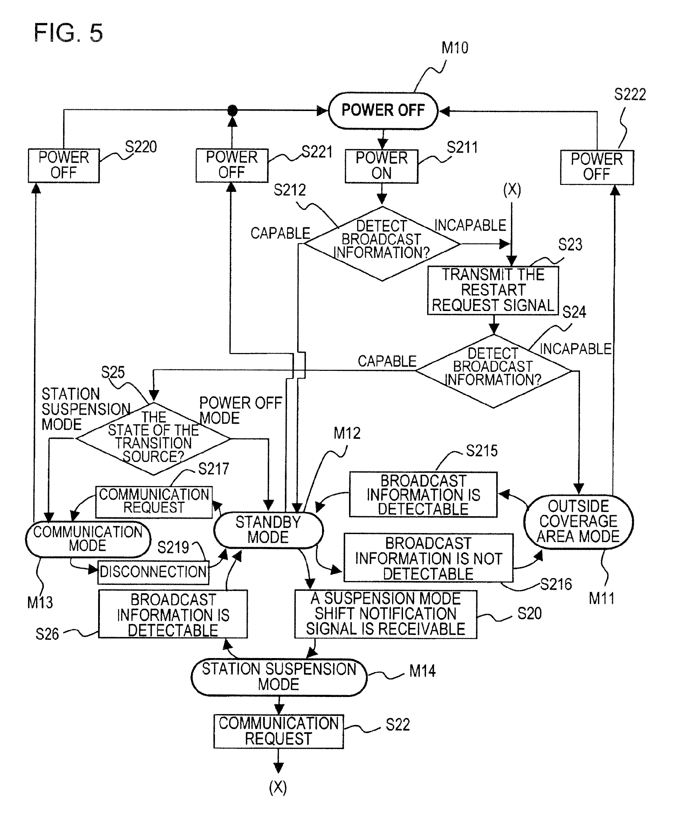

Next, state transition in the terminal 200 will be described. FIG. 5 is a diagram illustrating an example of a state transition diagram of the terminal 200. In the terminal 200, a station suspension mode (M14) is further provided. The station suspension mode (M14) signifies, for example, a mode when the terminal 200 is located in the service area of the base station 100 placed in the suspension mode (M3). The station suspension mode (M14) is also a mode in which the terminal 200 retrieves any one of the operator identification code, the radio communication method and the frequency bandwidth, or the combination thereof, of an operator immediately before the terminal 200 shifts to the station suspension mode (M14). Further, the station suspension mode (M14) is a mode in which, for example, the power of the terminal 200 is in an ON state, and power consumption is smaller than in the outside coverage area mode (M11).

The terminal 200 in the station suspension mode (M14) does not retrieve all operator identification codes, radio communication methods and frequency bandwidths with which the own terminal is compatible, as is performed in the outside coverage area mode (M11). The terminal 200 in the station suspension mode (M14) retrieves any one of the identification code, the radio communication method and the frequency bandwidth, or the combination thereof (or broadcast information) of the operator immediately before shifting to the station suspension mode (M14). Therefore, in the terminal 200 placed in the station suspension mode (M14), retrieval objects are narrower as compared to the terminal 200 in the outside coverage area mode (M11), and accordingly, power consumption can be reduced. Further, the terminal 200 in the outside coverage area mode (M11) continuously performs such the above retrieval, whereas the terminal 200 in the station suspension mode (M14) performs retrieval at constant time intervals. Therefore, a retrieval time in the station suspension mode (M14) is shorter than a retrieval time in the outside coverage area mode (M11), and accordingly, power consumption can be reduced.

Incidentally, in the terminal 200 placed in the outside coverage area mode (M11), for example, the radio unit 210, the control function unit 220, the display unit 240 and the input unit 250 can be brought into operation.

As illustrated in FIG. 5, when the terminal 200 in the standby mode (M12) receives a suspension mode shift notification signal transmitted from the base station 100 (S20), the terminal 200 can shift to the station suspension mode (M14). The suspension mode shift notification signal signifies a signal to notify that the base station 100 shifts to the suspension mode (M14), to the terminal 200 located in the service area of the own station. On receipt of the suspension mode shift notification signal (S20), the terminal 200 can grasp that the base station 100 currently in connection shifts to the suspension mode (M3).

The terminal 200, after shifting to the station suspension mode (M14), can shift to the communication mode (M13), the standby mode (M12) and further, the outside coverage area mode (M11).

A shift from the station suspension mode (M14) to the communication mode (M13) is, for example, as follows. Namely, when a communication request is generated by the operation of a calling button or a start-to-talk button by a human operator (S22), the terminal in the station suspension mode (M14) transmits a restart request signal to the base station 100 in the suspension mode (M3) (S23). By this, the base station 100 restarts and shifts to the normal mode (M1), so as to transmit broadcast information. If the terminal 200 can detect the above broadcast information ("Capable" in S24), the terminal 200 shifts to the communication mode (M13) (in the case of the "station suspension mode" in S25). Based on the detected broadcast information, the terminal 200 performs, for example, location registration and authentication between with the base station 100, and can shift to the communication mode (M13).

Also, a shift from the station suspension mode (M14) to the suspension mode (M3) is, for example, as follows. Namely, by a restart request signal transmitted from another terminal in the station suspension mode (M14), the base station 100 can shift from the suspension mode (M3) to the normal mode (M1). Then, the base station 100 shifted to the normal mode (M1) transmits broadcast information, and therefore the terminal 200 in the station suspension mode (M14), on receiving the broadcast information (S26), can shift to the standby mode (M12). Also, when the terminal 200 in the station suspension mode (M14) detects the broadcast information after moving to the service area of the base station 100 (S26), the terminal 200 can shift to the standby mode (M12).

Furthermore, a shift from the station suspension mode (M14) to the outside coverage area mode (M11) is, for example, as follows. Namely, if the terminal 200 in the station suspension mode (M14) makes a communication request (S22) and transmits a restart request signal (S23), and if the terminal 200 fails to receive broadcast information from the base station 100 ("Incapable" in S24), the terminal 200 can shift to the outside coverage area mode (M11). When the terminal 200 transmits the restart request signal, the base station 100 is expected to shift to the normal mode (M1) and transmit broadcast information, but it can be considered that the reason of the failure to receive the broadcast information is that the terminal 200 moves to the outside of the service area of the base station 100.

Transitions to the other modes M11-M13 are identical to the above-mentioned FIG. 19B, and therefore, the description will be omitted.

### <configuration example of the radio base station apparatus>

Next, a configuration example of the base station 100 will be described. FIG. 6 is a diagram illustrating a configuration example of the base station 100. The same symbols are attached to the same configuration parts depicted in FIG. 3A.

The base station 100 includes the radio unit 110, the control function unit 130, and the external interface unit 150. The radio unit 110 includes the receiver 111 and the transmitter 112.

Further, the control function unit 130 includes a RACH signal detection unit 131, a last communication time recording unit 132, an incoming call information processing unit 133, a suspension mode shift prohibition determination unit 134, a suspension prohibition recording unit 135, a suspension mode switching control unit 136, a transmitter power control unit (hereinafter "power control unit") 137 and a broadcast information generation unit 138.

Here, for example, the first transmission unit 170 in the first embodiment corresponds to the broadcast information generation unit 138 and the transmitter 112. Also, for example, the first mode switching control unit 171 corresponds to, for example, the RACH signal detection unit 131, the last communication time recording unit 132, the incoming call information processing unit 133, the suspension mode shift prohibition determination unit 134, the suspension prohibition recording unit 135, the suspension mode switching control unit 136 and the power control unit 137.

The receiver 111 receives a radio signal transmitted from the terminal 200, converts (downconverts) the received radio signal into a baseband signal. To perform radio signal reception, conversion, etc., the receiver 111 includes a reception antenna, an A/D converter circuit, a D/A converter circuit, a frequency converter, a band pass filter (BPF), etc.

The RACH signal detection unit 131 detects a RACH signal from a baseband signal being output from the receiver 111. The RACH signal is transmitted from the terminal 200 using a radio resource allocated by the base station 100, for example, and accordingly, the RACH signal detection unit 131 can detect the radio signal using radio resources (time and frequency, for example) allocated for the RACH signal. As the radio signal, for example, there is a restart request signal transmitted from the terminal 200, for example. The RACH signal detection unit 131, when detecting the restart request signal for example, can output a control signal representing that effect to the suspension mode switching control unit 136.

The last communication time recording unit 132 is, for example, a memory that records the last communication time of the base station 100 with the terminal 200. The last communication time recording unit 132 is connected to the transmitter 112. The transmitter 112 is configured to be able to output the time of a radio signal transmitted to the terminal 200, to the last communication time recording unit 132 for each terminal 200, for example, so that the time finally overwritten into the last communication time recording unit 132 is the last communication time of the terminal 200. To output such the time, the transmitter 112 may provide, for example, a timer and a counter internally.

The incoming call information processing unit 133 inputs incoming call information transmitted from the control station 300 or an adjacent base station, through the external interface unit 150. When the incoming call information being input through the control station 300 is destined to a terminal 200 located in the coverage area of the base station 100, the incoming call information processing unit 133 outputs to the suspension mode switching control unit 136 a control signal representing that there is an incoming call destined to the terminal 200.

Also, when the incoming call information is a suspension mode shift notification signal and a start notification signal transmitted from the adjacent base station, the incoming call information processing unit 133 outputs a control signal representing that effect to the suspension mode switching control unit 136. The suspension mode shift notification signal from the adjacent base station is, for example, a signal to notify the base station 100 that the adjacent base station shifts to the suspension mode (M3). Also, the start notification signal is a signal to notify the base station 100 that the adjacent base station restarts from the suspension mode (M3). Details will be described later.

The suspension mode shift prohibition determination unit 134 determines whether or not signals input through the external interface unit 150 includes a signal corresponding to suspension mode shift prohibition control, and if there is a signal corresponding to suspension mode shift prohibition control, the suspension mode shift prohibition determination unit 134 records that effect into the suspension prohibition recording unit 135. The determination can be made by using, for example, a flag that indicates suspension mode shift prohibition control or whether or not a predetermined number that represents the suspension mode shift prohibition control is included in a signal input from the external interface unit 150. There are two signals associated with the suspension mode shift prohibition control, namely, one is to prohibit shifting to the suspension mode (M3) and another is to cancel prohibition of shifting to the suspension mode (M3). Therefore, for example, when a signal representing prohibition of shifting to the suspension mode (M3) is input, the suspension mode shift prohibition determination unit 134 records that effect into the suspension prohibition recording unit 135. Also, when a signal representing cancellation of prohibition of shifting to the suspension mode (M3) is input, the indication of prohibition of shifting to the suspension mode (M3) recorded in the suspension prohibition recording unit 135 can be deleted from the suspension prohibition recording unit 135.

The suspension prohibition recording unit 135 is a memory to record the suspension mode shift prohibition control therein. For example, the suspension prohibition recording unit 135 can record an effect representing prohibition of shifting to the suspension mode (M3).

The suspension mode switching control unit 136 determines to switch from the normal mode (M1) to the suspension mode (M3), and determines to restart from the suspension mode (M3) to switch to the normal mode (M1), so as to perform a variety of types of control according to the respective cases.

In regard to a shift from the normal mode (M1) to the suspension mode (M3), the suspension mode switching control unit 136 refers to the last communication time recording unit 132 and the suspension prohibition recording unit 135, to determine whether or not a shift to the suspension mode (M3) is to be made. For example, the suspension mode switching control unit 136 determines to shift to the suspension mode (M3) when a set time passes after the last communication time and a shift to the suspension mode is not prohibited. At this time, the suspension mode switching control unit 136 controls to notify a terminal 200 located in the coverage area and an adjacent base station that the own base station shifts to the suspension mode (M3). Details will be described later. Thereafter, the suspension mode switching control unit 136 outputs to the power control unit 137 a control signal to switch off the power (or halt the operation) of the transmitter 112. By this, the operation of the transmitter 112 halts and the base station 100 shifts to the suspension mode (M3).

Further, in regard to a shift to the normal mode (M1) after restarting from the suspension mode (M3), the suspension mode switching control unit 136 can perform determination on the basis of a signal from the RACH signal detection unit 131 or the incoming call information processing unit 133. Namely, when inputting from the RACH signal detection unit 131 a control signal representing that a restart request signal is received, the suspension mode switching control unit 136 determines to shift from the suspension mode (M3) to the normal mode (M1). Also, when inputting from the incoming call information processing unit 133 a control signal representing that there is incoming call information destined to the terminal 200, the suspension mode switching control unit 136 determines to shift from the suspension mode (M3) to the normal mode (M1). On determining to shift to the normal mode (M1) after restarting, the suspension mode switching control unit 136 outputs to the power control unit 137 a control signal to restart the transmitter 112. By this, the base station 100 in the suspension mode (M3) shifts to the normal mode (M1). Further, the suspension mode switching control unit 136 controls to notify the adjacent base station that the own base station restarts from the suspension mode (M3) and shifts to the normal mode (M1). Details will be described later.

Additionally, the suspension mode switching control unit 136 can receive a signal representing that the own station shifts to the suspension mode (M3) and a signal representing that the own station restarts from the suspension mode (M3) and shifts to the normal mode (M1), from the adjacent base station through the incoming call information processing unit 133. The details thereof will also be described later.

The power control unit 137 can switch off the power of the transmitter 112 to halt the operation or can switch on the power to restart, based on a control signal from the suspension mode switching control unit 136. Accordingly, the power control unit 137 can output, for example, a control signal representing power ON or OFF to the transmitter 112.

The broadcast information generation unit 138 can generate broadcast information on the basis of an instruction from the suspension mode switching control unit 136. The broadcast information generation unit 138 can generate, for example, the suspension mode shift notification signal, an adjacent base station in-suspension notification signal and an adjacent base station start notification signal, as the broadcast information. The adjacent base station in-suspension notification signal is, for example, a signal to notify a terminal 200 located in the coverage area of the base station 100 that the adjacent base station is in the suspension mode (M3). Also, the adjacent base station start notification signal is, for example, a signal to notify the terminal 200 located in the coverage area of the base station 100 that the adjacent base station restarts from the suspension mode (M3) (or restarts and shifts to the normal mode (M1)). The details of the above signals will be described later. The broadcast information includes an operator identification code, a frequency bandwidth, an identification number (such as cell ID) of the own station, etc., as described earlier. During the normal mode (M1), the broadcast information generation unit 138 can generate the broadcast information at constant intervals.

The transmitter 112 can transmit to the terminal 200 the broadcast information etc. being output from the broadcast information generation unit 138 after converting (upconverting) from a baseband signal to a radio signal. Therefore, the transmitter 112 may include an A/D converter circuit, a D/A converter circuit, a frequency converter, a band pass filter (BPF), a transmission antenna, etc. Also, the transmitter 112 can halt or restart the operation on the basis of a control signal from the power control unit 137.

### <Configuration example of the terminal 200>

Next, a configuration example of the terminal 200 will be described. The terminal 200, as depicted in FIG. 7, includes the radio unit 210, the control function unit 220, the display unit 240 and the input unit 250. The radio unit 210 includes a transmitter 211, a receiver 212 and a power measurement unit 213. Further, the control function unit 220 includes a broadcast information detection unit 221, a mode switching control unit 222, a display control unit 223, a RACH signal generation unit 224, an adjacent base station suspension recording unit 225 and a measurement result processing unit 226.

Here, the mode switching control unit 270 according to the first embodiment corresponds to the receiver 212, the broadcast information detection unit 221, the mode switching control unit 222, the display control unit 223, the adjacent base station suspension recording unit 225 and the measurement result processing unit 226, for example.

The transmitter 221 can convert (upconvert) an RACH signal being output from the RACH signal generation unit 224 into a radio signal, to transmit to the base station 100. To perform such conversion and transmission, the transmitter 221 may include, for example, an A/D converter circuit, a D/A converter circuit, a frequency converter, a band pass filter (BPF) and a transmission antenna. The RACH signal to be transmitted includes a restart request signal, for example.

The receiver 212 receives a radio signal transmitted from the terminal 200, so as to convert (downconvert) into a baseband signal. To perform such reception and conversion, the receiver 212 may also include, for example, a reception antenna, an A/D converter circuit, a D/A converter circuit, a frequency converter, a band pass filter (BPF), etc.

The power measurement unit 213 measures the receiving power of the radio signal received in the receiver 212. The power measurement unit 213 can output the measured receiving power to the measurement result processing unit 226.

On detecting broadcast information out of baseband signal output from the receiver 212, the broadcast information detection unit 221 outputs to the mode switching control unit 222 a control signal representing that the broadcast information is detected. The broadcast information includes, for example, a suspension mode shift notification signal transmitted from the base station 100, an adjacent base station start notification signal, etc. On detection of these signals, the broadcast information detection unit 221 can output control signals respectively representing that effect.

Further, on receiving from the mode switching control unit 222 a shift control signal to the station suspension mode (M14), the broadcast information detection unit 221 retrieves broadcast information immediately before, at certain time intervals. By this, the terminal 200 in the station suspension mode (M14) can retrieve any one of an operator identification code, a radio communication method and a frequency bandwidth, or the combination thereof, immediately before shifting to the station suspension mode (M14). Incidentally, the broadcast information detection unit 221 retrieves all of the broadcast information with which the terminal 200 is compatible, when receiving from the mode switching control unit 222 a shift control signal to shift to the outside coverage area mode (M11). The broadcast information to be retrieved in the outside coverage area mode (M11) includes, for example, all operator identification codes, radio communication methods and frequency bandwidths.

Further, when receiving from the mode switching control unit 222 a communication mode (M13) shift control signal or a standby mode (M12) shift control signal, the broadcast information detection unit 221 can detect an adjacent base station in-suspension notification signal or an adjacent base station start notification signal. At this time, the broadcast information detection unit 221 can record an adjacent base station suspension flag into the adjacent base station suspension recording unit 225. By this, for example, the terminal 200 can detect at handover whether or not the adjacent handover-target base station is in the suspension mode (M3). Details will be described later.

When receiving from the broadcast information detection unit 221 a control signal to the effect that the suspension mode shift notification signal is detected, the mode switching control unit 222 determines to shift to the station suspension mode (M14) and outputs a shift control signal to the station suspension mode (M14) to both the display control unit 223 and the broadcast information detection unit 221. By this, the terminal 200 can shift to the station suspension mode (M14).

Also, when receiving from the input unit 250 a control signal representing a communication request or power ON, the mode switching control unit 222 can output a shift control signal to shift from the station suspension mode (M14) to a corresponding mode to the RACH signal generation unit 224, the broadcast information detection unit 221, the display control unit 223, etc. The mode switching control unit 222 executes, for example, processing such as determining to shift to the outside coverage area mode (M11), the standby mode (M12), the communication mode (M13) and the station suspension mode (M14), as depicted in FIG. 5, of which details will be described later.

The display control unit 223, on receiving a mode shift control signal from the mode switching control unit 222, can control the display unit 240 to display the present mode to the display unit 240.

The RACH signal generation unit 224 generates an RACH signal. For example, the RACH signal generation unit 224 can generate a restart request signal, when receiving a shift control signal to shift to the station suspension mode (M14) from the mode switching control unit 222, and when receiving an instruction to generate the restart request signal from the measurement result processing unit 226.

The adjacent base station suspension recording unit 225 is a memory to record a flag representing that the adjacent base station is in the suspension mode (M3). When the terminal 200 is located in the coverage area of the base station 100 and located at the edge of the service area, receiving power from the base station 100 becomes smaller than a set value, and therefore, the terminal retrieves a handover target. Then, when the adjacent base station of the handover target is in the suspension mode (M3), there is a case that the terminal 200 shifts to the outside coverage area mode (M11) because detection of the receiving power from the base station 100 of concern is not possible. To avoid such a case, a flag that represents whether or not the adjacent base station is in the suspension mode (M3) is recorded in the adjacent base station suspension recording unit 225, so as to prevent the terminal 200 from becoming the outside coverage area mode (M11) when the terminal 200 moves to the service area of the base station 100 in the suspension mode.

For example, in the adjacent base station suspension recording unit 225, there is recorded each flag representing whether or not each base station is in the suspension mode (M3). For example, each of the adjacent base station in-suspension notification signal and the adjacent base station start notification signal includes each identification number (cell ID etc.) of a base station 100 in the suspension mode (M3) and a base station 100 restarted (returned to the normal mode (M1)). Therefore, the broadcast information detection unit 221 records each flag to be ON or OFF, according to the identification number and the signal type of each corresponding base station. For example, when detecting the adjacent base station in-suspension notification signal, the broadcast information detection unit 221 can record ON (or "1") into the adjacent base station suspension recording unit 225 relative to the identification number of the corresponding base station, so as to record that the corresponding adjacent base station is in the suspension mode (M3). Also, when detecting the adjacent base station start notification signal, the broadcast information detection unit 221 can record OFF (or "0") from ON in regard to the identification number of the related base station 100, so as to record that the corresponding adjacent base station restarts.

The measurement result processing unit 226 refers to the adjacent base station suspension flag recorded in the adjacent base station suspension recording unit 225 and the measurement result of the power measurement unit 213, determines whether or not to transmit a restart request signal, and on determining to transmit, outputs a generation instruction of the restart request signal to the RACH signal generation unit 224. For example, when the terminal 200 hands over to the base station 100 in the suspension mode (M3), the generation of a restart request signal is instructed when the receiving power of the base station in connection is smaller than a set value, and the terminal 200 is unable to retrieve a handover-target base station, and the adjacent base station suspension flag is ON. Details thereof will also be described later.

### <Operation example>

Next, an operation example will be described. As an operation example of the present radio mobile communication system 10, there are two types of shift operation: shift operation in which the base station 100 shifts to the suspension mode (M3) and shift operation in which the terminal 200 shifts to the station suspension mode (M14). Furthermore, there is operation to restart the base station 100 currently in the suspension mode (M3).

First, shift operation to the suspension mode (M3) and the station suspension mode (M14) will be described, and subsequently, restart operation from the suspension mode (M3) will be described.

### < 1. Shift operation to the suspension mode (M3) and the station suspension mode (M14)>

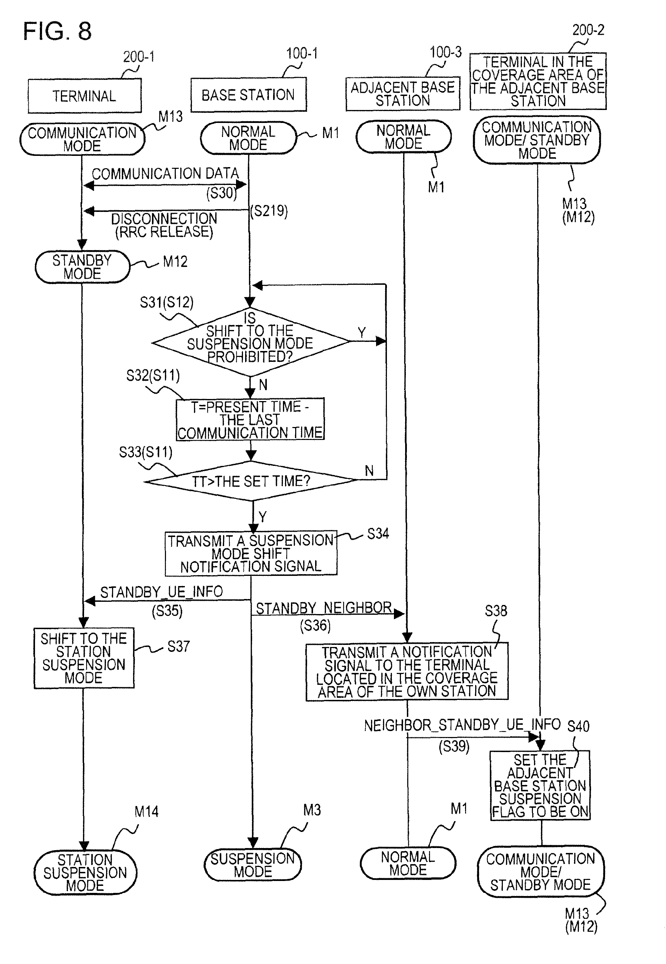

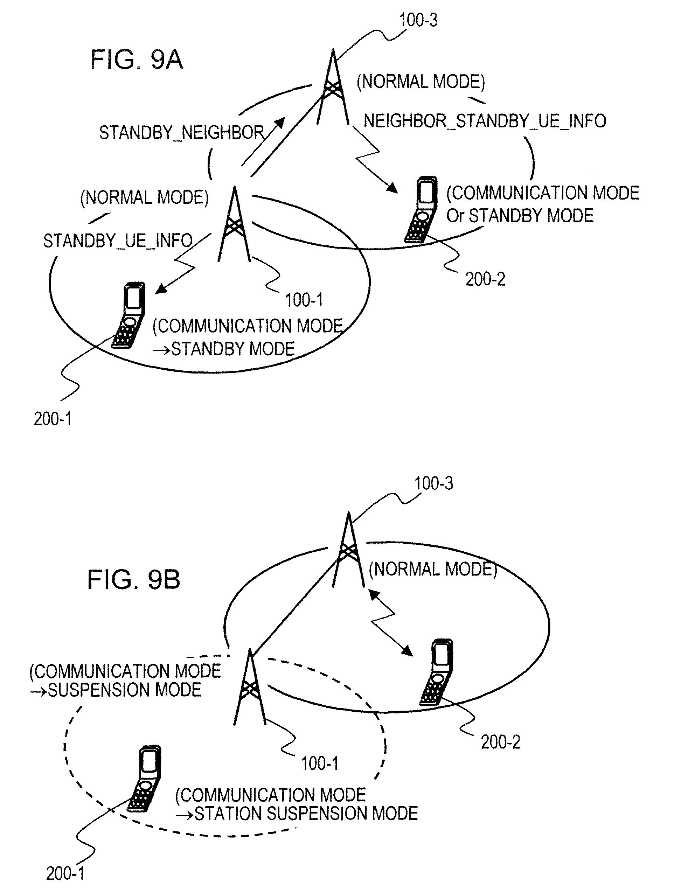

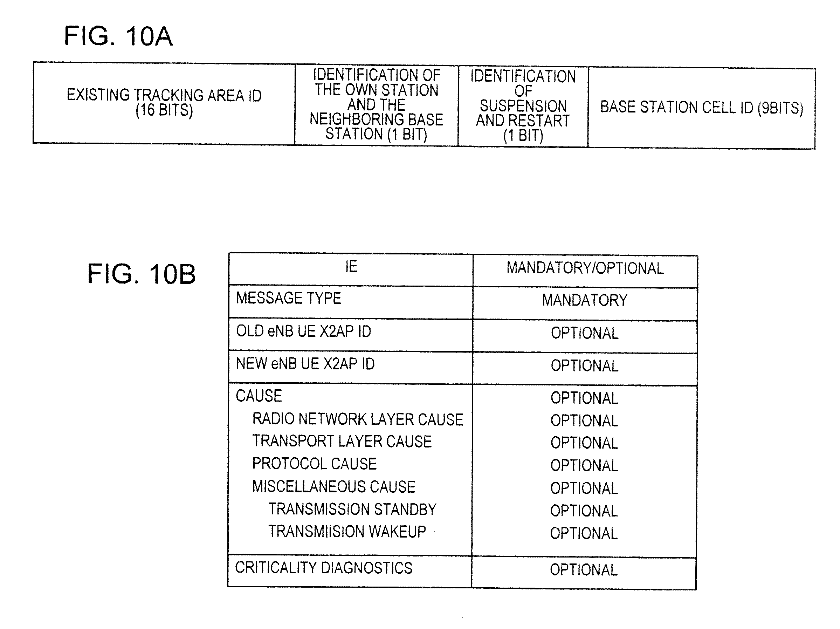

First, a description will be given on the shift operation to the suspension mode (M3) and the station suspension mode (M14). FIG. 8 is a sequence diagram illustrating an example of the shift operation to the suspension mode (M3) and the station suspension mode (M14), FIGS. 9A and 9B illustrate diagrams respectively illustrating examples on what kind of signals are transmitted from the base station 100 and the terminal 200. Also, FIGS. 10A and 10B are diagrams illustrating signal examples.

A description will be given on FIG. 8. As a premise, for example, a terminal 200-1 is in the communication mode (M13) and is connected to a base station 100-1, and the base station 100-1 is in the normal mode (M1), as depicted in FIG. 9A etc. Further, there is a base station 100-3 as an adjacent base station, and a terminal 200-2 is located in the service area of the adjacent base station 100-3. The terminal 200-2 is in either the communication mode (M13) or the standby mode (M12). Here in FIG. 8, the same symbols as in FIG. 4 are attached to the same processing portions in the state transition diagram of FIG. 4.

In such a situation, the terminal 200-1 and the base station 100-1 perform radio communication, so as to mutually transmit and receive data signals (hereinafter, data) (S30). Then, on completion of communication, the terminal 200-1 executes RRC Release (or transmits an RRC Release message) to terminate radio communication with the base station 100 (S219). Thereafter, the terminal 200-1 shifts to the standby mode (M12).

On the other hand, after the execution of the RRC Release, the base station 100-1 confirms whether or not suspension mode shift prohibition control is activated (S31 (or S12 in FIG. 4)). For example, the suspension mode switching control unit 136, by referring to the suspension prohibition recording unit 135, can perform confirmation based on whether or not a flag that represents prohibition to the suspension mode (M3) is recorded.

When the suspension mode shift prohibition control is activated (Y in S31), a shift to the suspension mode (M3) is prohibited, and therefore, the base station 100-1 maintains the normal mode (M1).

On the other hand, the base station 100-1, when suspension mode shift prohibition control is not made (N in S31), measures an elapsed time (S32 (or S11)) and determines whether or not a set time passes (S33 (or S11)). For example, the transmitter 112 records into the last communication time recording unit 132 the transmission time of a signal that represents an RRC Release message to the terminal 200-1, and the suspension mode switching control unit 136 reads out the last communication time from the last communication time recording unit 132 and, by subtracting from the present time, measures an elapsed time T. Then, the suspension mode switching control unit 136 can determine whether or not the elapsed time T exceeds the set time. If communication starts before the elapsed time T passes, the present time is recorded into the last communication time recording unit 132 by the transmitter 112 as the last communication time, and the elapsed time T is reset, needless to say. For example, the set time is retained in an internal memory of the suspension mode switching control unit 136, so as to be read out at discretion by the suspension mode switching control unit 136.

When the elapsed time T does not exceed the set time (N in S33), the base station 100-1 moves to S31 again and repeats the above-mentioned processing. For example, when communication is restarted, the elapsed time does not exceed the set time because the elapsed time T is reset.

On the other hand, when the elapsed time T exceeds the set time (Y in S33), the base station 100-1 generates a suspension mode shift notification signal to transmit to all terminals that are located in the coverage area (S34, S35). For example, when communication is not restarted if the elapsed time T passes, the suspension mode switching control unit 136 determines to shift to the suspension mode (M3). For example, when the elapsed time T exceeds the set time, the suspension mode switching control unit 136 determines to shift to the suspension mode (M3), so as to instruct the broadcast information generation unit 138 to generate a suspension mode shift notification signal. Based on the instruction, the broadcast information generation unit 138 generates the suspension mode shift notification signal, and transmits the suspension mode shift notification signal through the transmitter 112. Additionally, in FIG. 8 and FIG. 9A, the suspension mode shift notification signal is represented as STANDBY_UE_INFO.

FIG. 10A illustrates an example of the suspension mode shift notification signal. For example, the suspension mode shift notification signal is transmitted through an X1 interface in appropriation of SI (System Information) of 3GPP. For example, it is possible to use the extension bits of Tracking Area Id in 3GPP TS 36.300 V8. 10.0 (2009-09) (3GPP TS 36.300 V8.10.0 (2009-09), Annex C, Table C.2.1-1, FFS (for further study)). As depicted in FIG. 10A, for example, the suspension mode shift communication signal can be configured to include a bit representing "own station" in the field subsequent to the "Tracking Area Id", a bit representing "suspension" in the next field, and a cell ID of the base station 100 in the next.

Returning to FIG. 8, on receiving the suspension mode shift notification signal, the terminal 200-1 shifts to the station suspension mode (M14) (S37). For example, the broadcast information detection unit 221 outputs to the mode switching control unit 222 a control signal representing that the suspension mode shift communication signal is detected, and on receiving the above control signal, the mode switching control unit 222 determines to shift from the standby mode (M12) to the station suspension mode (M14). When shifting to the station suspension mode (M14), the terminal 200-1 outputs a station suspension mode shift control signal to the broadcast information detection unit 221. On receiving the station suspension mode shift control signal, the broadcast information detection unit 221 retrieves any one of an operator identification code, a radio communication method and a radio frequency bandwidth, or the combination thereof, that are used immediately before the station suspension mode (M14). The retrieval may be performed, for example, at constant time intervals.

Meanwhile, the base station 100 transmits a suspension mode shift notification signal to an adjacent base station 100-3 (S36). By this, the base station 100 can notify the adjacent base station 100-3 that the own station shifts to the suspension mode (M3). FIG. 10B is a diagram illustrating an example of the suspension mode shift notification signal to be transmitted to the adjacent base station 100-3. The transmission to the adjacent base station 100-3 is made using, for example, the X2 interface. For example, an ERROR INDICATION message in X2-AP (Application Protocol) (3GPP TS 36.423 V8.9.0 (2010-03), Chapter 9.1.2.2) can be appropriated. For example, a flag "transmission standby" is set ON, and the identification number (for example, cell ID) of the own station is included in "Old EeNB UE X2AP ID" or ""New eNB UE X2AP ID". By this, the base station 100-1 can transmit the suspension mode shift notification signal to the adjacent base station 100-3. Additionally, in FIG. 8, FIG. 9A, etc., the suspension mode shift notification signal to be transmitted to the adjacent base station 100-3 is represented as STANDBY_NEIGHBOR.

Returning to FIG. 8, the base station 100-1 shifts to the suspension mode (M3) after transmitting the suspension mode shift notification signal to the terminal located in the coverage area and the adjacent base station (S34-S36). For example, the suspension mode switching control unit 136 outputs to the power control unit 137 a control signal representing switching off the power, and on receiving the control signal, the power control unit 137 outputs to the transmitter 112 a control signal to switch off the power of the transmitter 112. On receiving the control signal, the transmitter 112 switches off the power of the transmitter 112, to halt the operation. By this, the base station 100-1 shifts to the suspension mode (M3). In the suspension mode (M3), it is also possible not to operate the broadcast information generation unit 138, in addition to the transmitter 112.

On the other hand, on receiving the suspension mode shift notification signal (S36), the adjacent base station 100-3 transmits an adjacent base station in-suspension notification signal to all terminals located in the service area of the own station (S38, S39). In FIG. 8, FIG. 9A, etc., the adjacent base station in-suspension notification signal is represented as NEIGHBOR_STANDBY_UE_INFO. The adjacent base station in-suspension notification signal can also be represented by FIG. 10A. For example, the signal is configured to include a bit representing "adjacent" in the field subsequent to the "Tracking Area Id", a bit representing "suspension" in the next field, and a cell ID of the base station 100-1 in the next field. For example, on receiving the suspension mode shift communication signal from the incoming call information processing unit 133, the suspension mode switching control unit 136 extracts the cell ID of the base station 100-1 included in the above signal, and instructs the broadcast information generation unit 138 to generate an adjacent base station in-suspension notification signal, and also outputs the extracted cell ID to the broadcast information generation unit 138. Based on the instruction and the cell ID, the broadcast information generation unit 138 can generate the adjacent base station in-suspension notification signal to output to the terminal 200-2.

Returning to FIG. 8, on receiving the adjacent base station in-suspension notification signal, the terminal 200-2 sets the adjacent base station suspension flag ON to the adjacent base station suspension recording unit 225 (S40). For example, on detecting the adjacent base station in-suspension notification signal, the broadcast information detection unit 221 searches the adjacent base station suspension recording unit 225 for an item corresponding to the cell ID included in the above signal, and records a flag representing that the adjacent base station is in the suspension mode (M3), into the item of concern. This flag is used at handover, for example.

Here, if the terminal 200-2 receives the adjacent base station in-suspension notification signal, the terminal 200-2 only recognizes that the adjacent base station shifts to the suspension mode (M3), and does not perform any mode shift.

In the above-mentioned manner, the base station 100-1 shifts to the suspension mode (M3), and the terminal 200-1 shifts to the station suspension mode (M14). Also, the adjacent base station 100-3 can notify the terminal 200-2 located in the coverage area that the base station 100-1 shifts to the suspension mode (M3). FIG. 9B illustrates a configuration example of the radio mobile communication system 10 after shift operation to the suspension mode (M3) and the station suspension mode (M14) is made. Because the base station 100-1 is in the suspension mode (M3), no broadcast information is transmitted thereto, and the terminal 200-1, which is in the station suspension mode (M14), retrieves an operator identification code, a radio communication method and a radio frequency bandwidth immediately before shifting to the station suspension mode (M14).

### <2. Restart operation from the suspension mode (M3)>

Next, a description will be given on the operation of restarting the base station 100 shifted to the suspension mode (M3) to shift to the normal mode (M1). Hereinafter, such operation is referred to as restart operation. The following three cases exist when the base station 100 performs restart operation.
Case 1) When a communication request occurs at the terminal 200 in the station suspension mode (M14).
Case 2) When the terminal 200 fails to receive a suspension mode shift notification signal because of the power OFF (M10) and the power is switched ON while the terminal 200 is located in the service area of the base station 100 shifted to the suspension mode (M3), or when the terminal 200 located outside the service area moves to the service area of the base station 100 in the suspension mode (M3) and the power is switched ON.
Case 3) When the terminal 200 located in the coverage area of the base station 100 moves to an adjacent base station in the suspension mode (M3) by handover.

Each of the above three cases will be described below.

### <2.1 When a communication request occurs at the terminal 200 in the station suspension mode (M14)>

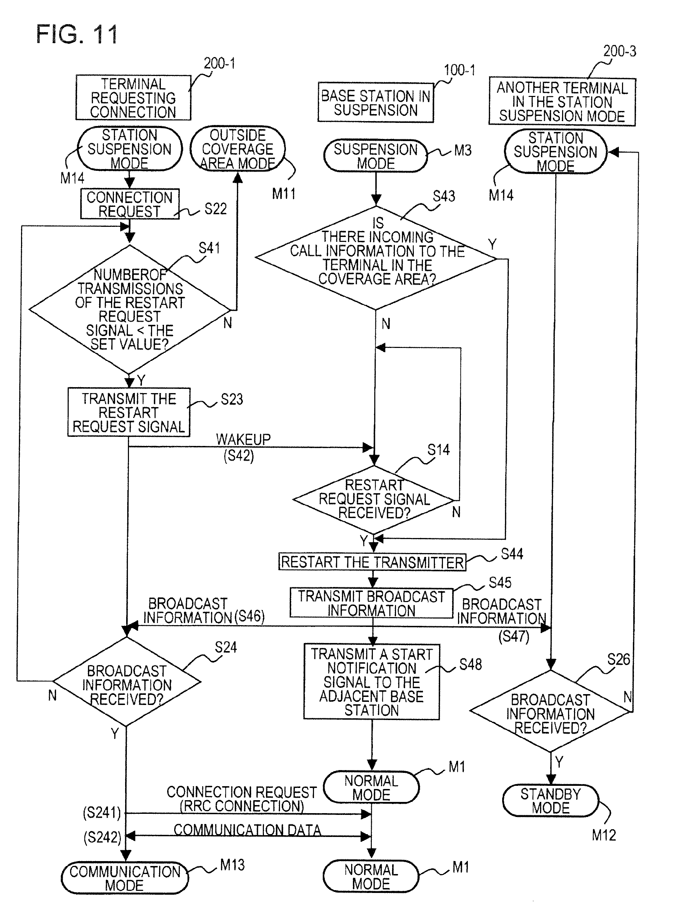

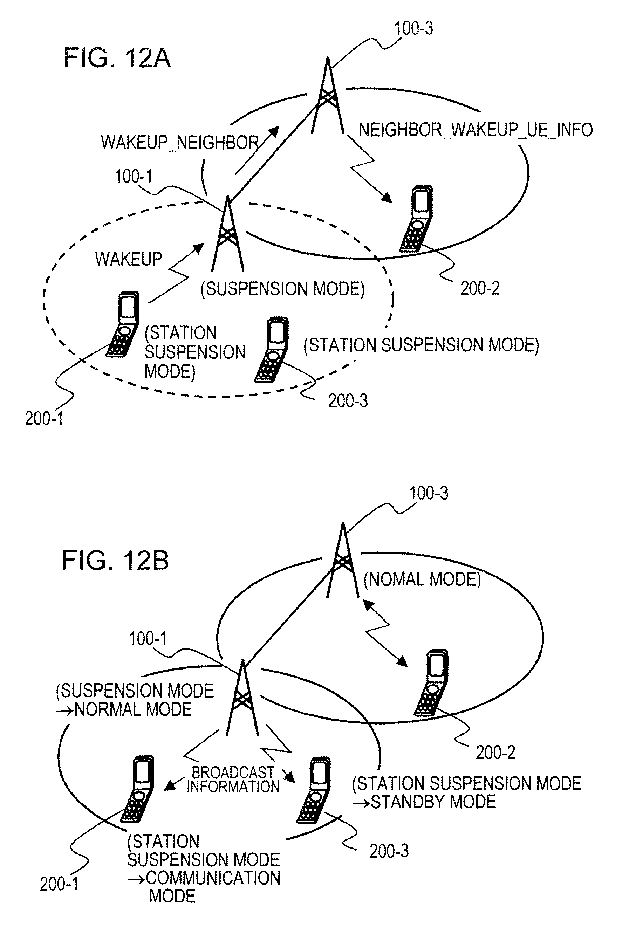

FIG. 11 is a sequence diagram illustrating an operation example when a communication request occurs at the terminal 200 in the station suspension mode (M14). Also, FIGS. 12A and 12B are diagrams illustrating examples of signals transmitted and received at the base station 100 and the terminal 200 in the operation example.

As a premise, for example, the base station 100-1 is in the suspension mode (M3) and the terminal 200-1 located in the service area of the base station 100-1 is in the station suspension mode (M14). The adjacent base station 100-3 that neighbors the base station 100-1 is in the normal mode (M1), and performs radio communication with the terminal 200-2 in the service area of the own base station 100-3. Further, it is assumed that another terminal 200-3 in the station suspension mode (M14) is also located in the service area of the base station 100-1.

As illustrated in FIG. 11, at the terminal 200-1 in the station suspension mode (M14), a connection request is made by the operation of a calling button etc. by a human operator (S22), and the terminal 200-1 discriminates whether or not the number of transmissions of the restart request signal is smaller than a set value (S41). For example, when a connection request is input from the input unit 250, the mode switching control unit 222 reads out the set value retained in the internal memory etc., so that the mode switching control unit 222 can discriminate whether or not the number of transmissions of the restart request signal is smaller than the set value.

Then, when the number of transmissions of the restart request signal is smaller than the set value (N in S41), the terminal 200-1 transmits the restart request signal (S23). For example, when the number of transmissions of the restart request signal is smaller than the set value, the mode switching control unit 222 instructs the RACH signal generation unit 224 to generate the restart request signal. Then, based on the instruction, the RACH signal generation unit 224 can generate the restart request signal and transmit to the base station 100-1 through the transmitter 211. At this time, the mode switching control unit 222 can increment the number of transmissions by one, for example.

The restart request signal is represented in FIG. 11, FIG. 12A, etc. as WAKEUP. The restart request signal is transmitted, for example, using a PRACH (Physical Random Access Channel) of 3GPP. For example, to avoid interference by discriminating from another signal using the PRACH, the restart request signal is transmitted by using an unused Configuration Index No. 60 of the PRACH in Preamble format 3 (3GPP TS 36.211 V8.9.0 (2009-12), Table 5.7.1-2).

After transmitting the restart request signal, the terminal 200-1 detects whether or not broadcast information is received from the base station 100-1 (S24). For example, the broadcast information detection unit 221 detects whether or not the broadcast information is received.

Then, on detecting the broadcast information (Y in S24), the terminal 200-1 shifts from the station suspension mode (M14) to the communication mode (M13), and performs communication with the base station 100-1 (S241, S242). For example, the terminal 200-1 transmits to the base station 100-1 a radio signal that represents a connection request (for example, RRC Connection message) (S241), to perform data transmission or reception (for example, FIG. 12B). For example, on detecting the broadcast information, the broadcast information detection unit 221 outputs to the mode switching control unit 222 a control signal representing that effect, and on receipt of the above control signal, the mode switching control unit 222 determines to switch to the communication mode (M13). The mode switching control unit 222 outputs a shift control signal that represents the communication mode (M13) to the broadcast information detection unit 221, the display control unit 223, the RACH signal generation unit 224, etc., and the terminal 200 shifts to the communication mode (M13).

On the other hand, when reception of the broadcast information is unsuccessful (N in S24), the terminal 200-1 goes to S41 again, to discriminate whether or not the number of transmissions of restart is smaller than the set value (S41).

Thereafter, the terminal 200-1 repeats the above-mentioned processing, and when the terminal 200-1 fails to receive the broadcast information if the restart request signal is transmitted as many times as the set value or more (N in S24 and N in S41), the terminal 200 shifts to the outside coverage area mode (M11) for the first time. For example, it is considered that the case of failure to receive the broadcast information in spite of the transmission of the restart request signal a lot of times is caused by that the terminal 200-1 moves outside the service area of the base station 100-1, or the base station 100-1 fails to restart because of the occurrence of a failure in the base station 100-1. In such a case, the terminal 200-1 is configured to shift to the outside coverage area mode (M11).

For example, if the number of transmissions of the restart request signal becomes equal to the set value, the mode switching control unit 222 determines to switch to the outside coverage area mode (M11) when receiving from the broadcast information detection unit 221 a control signal representing that the broadcast information does not be detected. Then, the mode switching control unit 222 outputs a shift control signal representing a shift to the outside coverage area mode (M11) to the display control unit 223, the broadcast information detection unit 221, the RACH signal generation unit 224, etc., so as to shift to the outside coverage area mode (M11).

On the other hand, the base station 100-1 in the suspension mode (M3) supervises whether or not incoming call information to the terminal 200-1 located in the service area of the own station is received from the control station 300, and whether or not a restart request signal is received from the terminal 200-1 (S43, S14).

On receiving the incoming call information to the terminal 200-1 (S43), the base station 100-1 restarts the transmitter 112 (S44). For example, when receiving from the control station 300 incoming call information destined to the terminal 200-1, the incoming call information processing unit 133 notifies the suspension mode switching control unit 136 of that effect, and the suspension mode switching control unit 136, on receiving this notification, outputs to the power control unit 137 a control signal to restart the transmitter 112. Then, by the power switched ON, the transmitter 112 operates and restarts.

Also, when receiving the restart request signal from the terminal 200-1 (N in S14), the base station 100-1 restarts the transmitter 112 (S44). For example, on detecting the reception of the restart request signal, the RACH signal detection unit 131 notifies the suspension mode switching control unit 136 of that effect, and the suspension mode switching control unit 136, on receiving this notification, outputs to the power control unit 137 a control signal to restart the transmitter 112.

On the other hand, when there is no incoming call information to the terminal 200-1 (N in S43), the base station 100-1 supervises the reception of a restart request signal (S14), and maintains the suspension mode (M3) if no restart request signal is received (N in S14).

Next, the base station 100-1 transmits broadcast information (S45-S47). For example, the suspension mode switching control unit 136 instructs the broadcast information generation unit 138 to generate broadcast information, and then, in the broadcast information generation unit 138, the broadcast information is generated and transmitted. The broadcast information is transmitted to all terminals located in the service area of the base station 100-1, and therefore, not only the terminal 200-1 transmitted the restart request signal, the other terminal 200-3 in the station suspension mode (M14) that does not transmit the restart request signal can receive the restart request signal (S47).

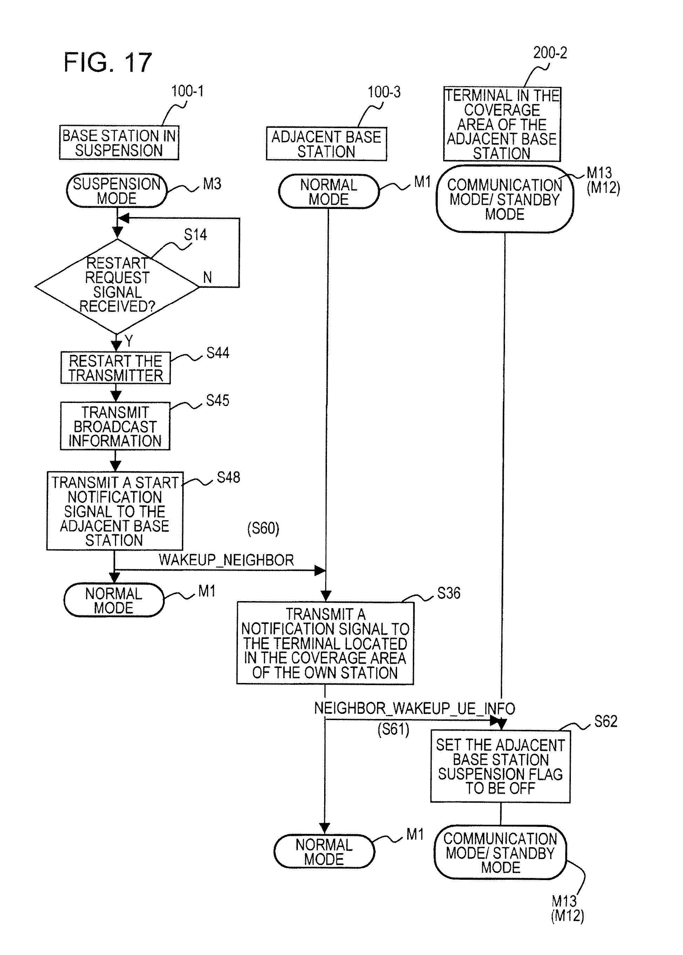

Next, the base station 100-1 transmits the start notification signal to the adjacent base station (S48). In FIG. 12A, the start notification signal is represented as WAKEUP_NEIGHBOR. The transmission of the start notification signal will be described later (for example, FIG. 17).

Next, the base station 100-1 shifts from the suspension mode (M3) to the normal mode (M1), so as to be able to perform data transmission and reception between with the terminal 200-1 (S241, S242 and, for example, FIG. 12B).

Meanwhile, on receiving the broadcast information from the base station 100-1, the terminal 200-3 in the station suspension mode (M14) that is located in the service area of the restarted base station 100-1 shifts from the station suspension mode (M14) to the standby mode (M12). On the other hand, when the terminal 200-3 fails to receive the broadcast information (N in S26), the terminal 200-3 maintains the station suspension mode (M14).

### <2.2 When the power of the terminal 200 is switched ON>

Next, as case 2, a description will be given on an example when the base station 100 performs restart operation when the power of the terminal 200 is switched ON. Among such cases, there is a case when the terminal 200 is in the power OFF (M10) and fails to receive a suspension mode shift notification signal, and the power is switched ON while located in the service area of the base station 100 shifted to the suspension mode (M3). Also, there is a case when the terminal 200 located outside the service area moves to the service area of the base station 100 in the suspension mode (M3) and the power is switched ON while located in the service area of the base station 100 placed in the suspension mode (M3). In either case, the terminal 200 did not shift to the station suspension mode (M14), and the operation starts from the power OFF (M10) state. In this case, the base station 100 is in the suspension mode (M3).

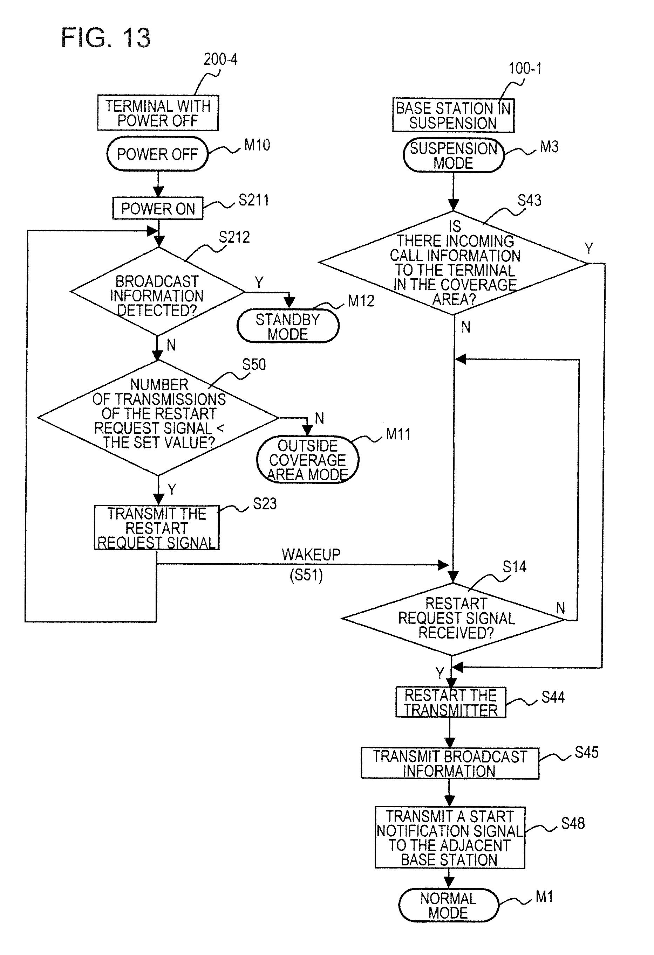

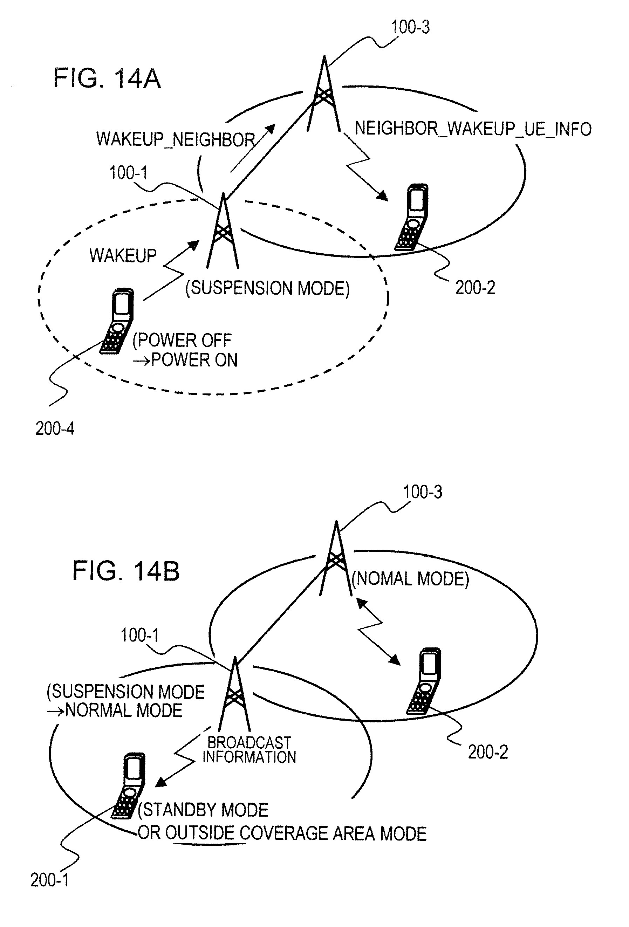

FIG. 13 is a sequence diagram illustrating an example of restart operation, and FIGS. 14A and 14B are diagrams respectively illustrating examples of signals transmitted and received in the restart operation. Here, it is assumed that a terminal 200-4 is in the power OFF (M10) state and is located in the service area of the base station 100-1.

The terminal 200-4 switches on the power from the power OFF (M10) state (S211).

Next, the terminal 200-4 confirms whether or not broadcast information is detected (S212). For example, confirmation can be made by whether or not the broadcast information detection unit 221 detects broadcast information.

When the detection of the broadcast information is unsuccessful (N in S212), the terminal 200-4 determines whether or not the number of transmissions of the restart request signal exceeds the set value (S50). For example, the broadcast information detection unit 221 notifies the mode switching control unit 222 that the detection of broadcast information is unsuccessful, and then, the mode switching control unit 222 compares the number of transmissions of the restart request signal with the set value, to determine whether or not the number of transmissions does not exceed the set value.

If the number of transmissions of the restart request signal does not exceed the set value (Y in S50), the terminal 200-4 transmits the restart request signal (S23). The restart request signal is transmitted using PRACH (Physical Random Access Channel), similar to the restart request signal in the operation example of the above-mentioned case 1 (S42). In FIGS. 13 and 14 A, the restart request signal is represented as WAKEUP.

On the other hand, when the terminal 200-4, after switching on the power, transmits the restart request signal and detects broadcast information (Y in S212), the terminal 200-4 shifts to the standby mode (M12). For example, the terminal 200-4 outputs to the mode switching control unit 222 a control signal representing that the broadcast information detection unit 221 detects the broadcast information. Based on the above control signal, the mode switching control unit 222 determines to shift to the standby mode (M12) and outputs a shift control signal that represents a shift to the standby mode (M12) to the display control unit 223, the broadcast information detection unit 221, etc. By this, the terminal 200-4 shifts to the standby mode (M12), and becomes a state in which communication can starts at any time (for example, FIG. 14B).

Also, after switching on the power, when the terminal 200-4 fails to detect broadcast information if the restart request signal is transmitted for the number of times equal to the set value (N in S212, N in S50), the terminal 200-4 shifts to the outside coverage area mode (M11).

On the other hand, the base station 100-1, on receiving the restart request signal (Y in S14), restarts and shifts to the normal mode (M1) (S44, S45, S48). Also, the base station 100-1 in the suspension mode (M3) restarts and shifts to the normal mode (M1) (S44, S45, S48) if there is incoming call information to a terminal located in the coverage area (Y in S43). As to the operation of the base station 100-1, the same operation as the operation in case 1 (when a communication request occurs at the terminal 200 in the station suspension mode (M14)) is performed.

### <2.3 When the terminal 200 located in the coverage area of the base station moves to an adjacent base station in the suspension mode (M3) by handover>

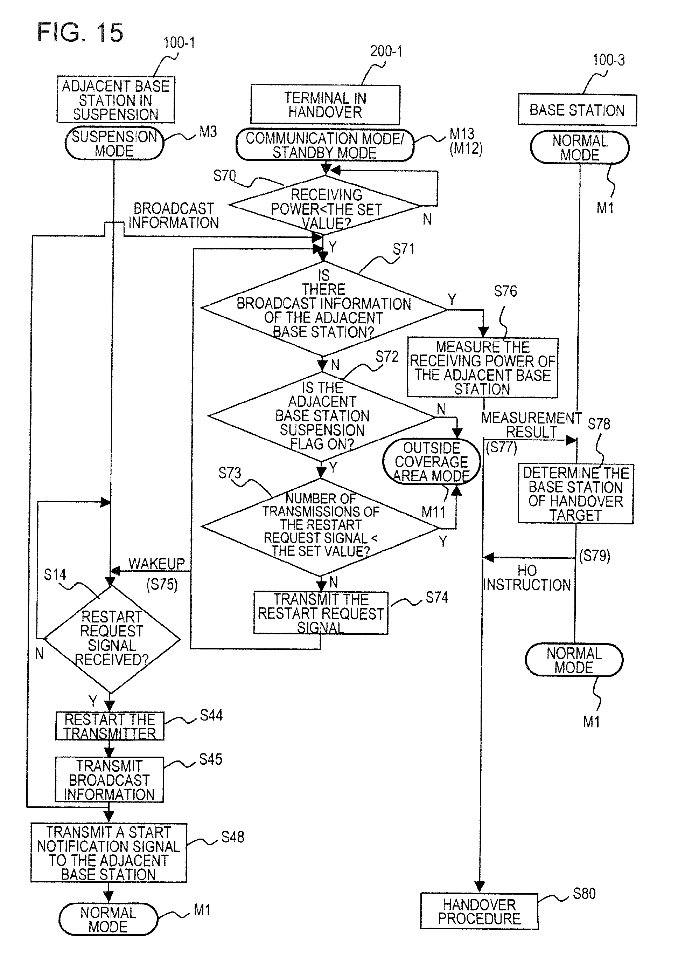

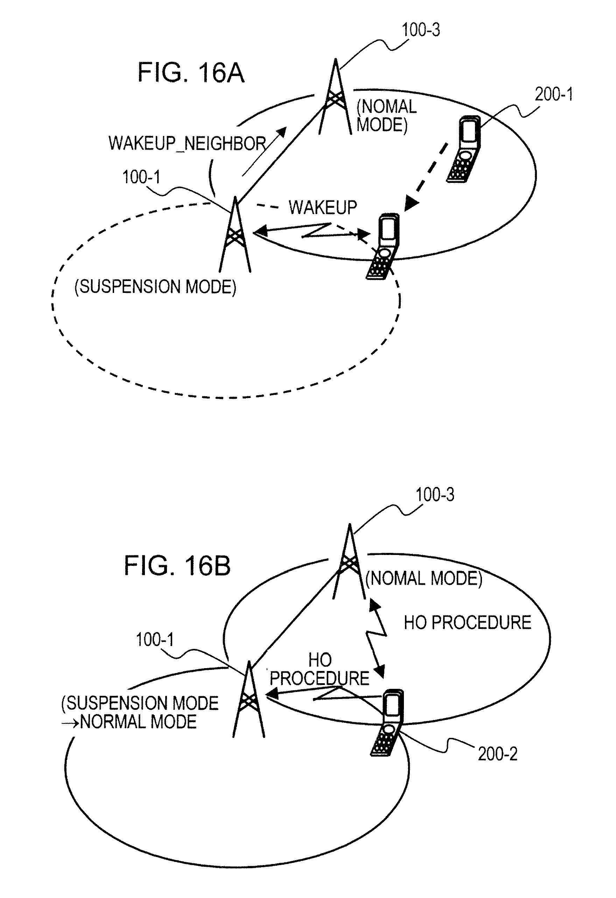

Next, a description will be given on an example of restart operation when the terminal 200 located in the coverage area of the base station 100 moves to an adjacent base station in the suspension mode (M3) by handover. FIG. 15 is a sequence diagram illustrating the present operation example and FIGS. 16A and 16B are diagrams respectively illustrating signal examples transmitted and received in the present operation example.

As a premise, as illustrated in FIG. 16A for example, the terminal 200-1 is located in the coverage area of the base station 100-3 that is in the normal mode (M1), and is in either the communication mode (M13) or the standby mode (M12). Further, the terminal 200-1 moves to the adjacent base station 100-1 in the suspension mode (M3) by the handover. An operation example will be described on such an example.

The terminal 200-1 measures the receiving power of the base station 100-3 currently in connection, to discriminate whether or not the receiving power is smaller than a set value (falls down below a set value) (S70). For example, the power measurement unit 213 measures the receiving power of a radio signal received by the receiver 212, and outputs a measurement result to the measurement result processing unit 226. The measurement result processing unit 226 compares the receiving power with the set value, and discriminates whether or not the receiving power is smaller than the set value, and thus, the present processing is performed.

When the receiving power is larger than and including the set value (N in S70), the terminal 200-1 maintains the communication mode (M13) or the standby mode (M12) (loop at S70).

On the other hand, when the receiving power is smaller than the set value (Y in S70), the terminal 200-1 discriminates whether or not broadcast information of the adjacent base station 100-1 is received (S71). For example, the broadcast information detection unit 221 can discriminate whether or not the broadcast information of the adjacent base station is received. For example, because the broadcast information includes the identification information (for example, cell ID) of the base station 100, the broadcast information detection unit 221 can discriminate from the identification information of the base station whether or not the broadcast information of the adjacent base station 100-1 is received.

The terminal 200-1, on receiving the broadcast information of the adjacent base station 100-1 (Y in S71), measures the receiving power of the adjacent base station (S76). For example, the measurement is performed by the power measurement unit 213.

Then, the terminal 200-1 performs a normal handover procedure between with the base station 100-1. Namely, the terminal 200-1 notifies the base station 100-3 of the measured receiving power (S77), and the base station 100-3 determines the handover target of the terminal 200-1 on the basis of the above receiving power (S78). The base station 100-3 notifies the terminal 200-1 of the determined handover target (S79), and the terminal 200-1 executes the handover procedure (S80). For example, the terminal 200-1 hands over to the adjacent base station 100-1 (for example, FIG. 16B).

On the other hand, when the terminal 200-1 fails to receive the broadcast information from the adjacent base station 100-1 (N in S71), the terminal 200-1 discriminates whether or not the adjacent base station suspension flag is ON (S72). The terminal 200-1 confirms that the failure to receive the broadcast information of the adjacent base station 100-1 is caused by whether or not the adjacent base station 100-1 is in the suspension mode (M3). For example, when the measurement result processing unit 226 inputs from the broadcast information detection unit 221 a control signal representing that the broadcast information of the adjacent base station 100-1 does not be received, the measurement result processing unit 226 confirms whether or not the adjacent base station 100-1 becomes the suspension mode (M3) in the adjacent base station suspension recording unit 225. Alternatively, when the measurement result processing unit 226 inputs from the broadcast information detection unit 221 a control signal representing that the reception of the broadcast information of the adjacent base station 100-1 is unsuccessful, it may also be possible to confirm by referring to the adjacent base station suspension recording unit 225.

Then, when the adjacent base station suspension flag is ON (or when the adjacent base station 100-1 is in the suspension mode (M3)), the terminal 200-1 transmits to the adjacent base station 100-1 a restart request signal within the range not exceeding the set value (N in S73, S74, S75). The terminal 200-1 confirms that the adjacent base station 100-1 is in the suspension mode (M3), and transmits the restart request signal to the adjacent base station 100-1 to restart. For example, when the measurement result processing unit 226, by referring to the adjacent base station suspension recording unit 225, confirms that the adjacent base station suspension flag of the adjacent base station 100-1 is ON, the measurement result processing unit 226 compares the number of transmissions of the transmitted start request signal stored in the internal memory with the set value. Then, if the number of transmissions is smaller than the set value, the measurement result processing unit 226 instructs the RACH signal generation unit 224 to generate a restart request signal. By this, the restart request signal is transmitted to the base station 100-1.

When the terminal 200-1 fails to detect the broadcast information in spite of the transmission of the restart request signal for the set number of transmissions (N in S71 and Y in S73), the terminal 200-1 shifts to the outside coverage area mode (M11). For example, the terminal 200-1 is configured to shift to the outside coverage area mode (M11) due to a reason that either the terminal 200-1 moves to outside the service area or the base station 100-1 in the suspension mode (M3) fails to restart due to a fault.

On the other hand, when the adjacent base station suspension flag is OFF (N in S72), the terminal 200-1 shifts to the outside coverage area mode (M11). In this case, for example, the adjacent base station 100-1 is in the normal mode (M1), and the reason for the failure to receive the broadcast information (N in S71) is that the terminal 200-1 is located outside the service area of the adjacent base station 100-1.

Here, operation in the adjacent base station 100-1 after the reception of the restart request signal is identical to case 1 and case 2 (for example, S14 and S44-S48 in FIG. 11 and FIG. 13), and therefore, description is omitted.

### <2.4 Other operation examples>

Next, as other operation examples, detailed processing of S48 in case 1 to case 3 will be described. The processing of S48 is an example when the base station 100 in the suspension mode (M3) received the restart request signal transmits the start notification signal to the adjacent base station, for example. In FIGS. 12, 14 and 16, the start notification signal is represented as WAKEUP_NEIGHBOR.

FIG. 17 is a diagram illustrating the detailed operation example of the processing of S48. As a premise, it is assumed that the base station 100-1 is in the suspension mode (M3), the adjacent base station 100-3 is in the normal mode (M1), and the terminal 200-2 is located in the service area of the adjacent base station 100-3.

The base station 100-1 in the suspension mode (M3), when receiving the restart request signal from the terminal 200-1 (S14), restarts the transmitter 112 to transmit broadcast information (S44, S45). Then, the base station 100-1 transmits a start notification signal to the adjacent base station (S48, S60). For example, on receiving a control signal representing that the restart request signal is received from the RACH signal detection unit 131, the suspension mode switching control unit 136 instructs the external interface unit 150 to generate the start notification signal and transmit to the adjacent base station 100-3. On receiving this instruction, the external interface unit 150 generates the start notification signal to transmit to the adjacent base station 100-3. Alternatively, it may also be possible that the suspension mode switching control unit 136 generates the start notification signal to transmit to the adjacent base station 100-3 through the external interface unit 150.

As the start notification signal, an X2-AP ERROR INDICATION message by 3GPP (3GPP TS 36.423 V8.9.0 (2010-03), Chapter 9.1.2.2) can be appropriated, similar to the suspension mode shift notification signal (STANDBY_NEIGHBOR). In the example depicted in FIG. 10B, the start notification signal is transmitted using a message in which a flag "transmission wakeup" is set ON and the identification number of the own station is included in "Old EeNB UE X2AP ID" or "New eNB UE X2AP ID".

Returning to FIG. 17, after transmitting the start notification signal (S48), the base station 100-1 in the suspension mode (M3) can shift to the normal mode (M1).

On the other hand, the adjacent base station 100-3, on receiving the start notification signal, transmits an adjacent base station start notification signal to a terminal located in the service area of the adjacent base station 100-3 (S36, S61). The adjacent base station start notification signal is a signal to notify the terminal 200-2 located in the coverage area of the adjacent base station 100-3 that the base station 100-1 restarts from the suspension mode (M3) (or restarts and shifts to the normal mode (M1)).

As the adjacent base station start notification signal, similar to the above-mentioned suspension mode shift notification signal, the adjacent base station in-suspension notification signal, etc., it is possible to use, for example, the extension bits of Tracking Area Id in 3GPP TS 36.300 V8. 10.0 (2009-09) (3GPP TS 36.300 V8.10.0 (2009-09), Annex C, Table C.2.1-1, FFS (for further study)). FIG. 10A illustrates an example of the adjacent base station start notification signal. For example, there are inserted a bit representing "adjacent" in the field subsequent to the "Tracking Area Id", a bit representing "restart" in the next field, and a cell ID of the base station 100-1 restarted in the next field, respectively.

For example, on receiving the start notification signal through the external interface unit 150, the incoming call information processing unit 133 in the adjacent base station 100-3 outputs to the suspension mode switching control unit 136 a control signal including that effect and a cell ID included in the start notification signal. Then, the suspension mode switching control unit 136 outputs the cell ID included in the start notification signal to the broadcast information generation unit 138, to instruct to generate a adjacent base station start notification signal. By this, the adjacent base station start notification signal is transmitted from the broadcast information generation unit 138 to the terminal 200-2 located in the coverage area.

Returning to FIG. 17, on receiving the adjacent base station start notification signal, the terminal 200-2 switches off the adjacent base station suspension flag (S62). By this, for example, the terminal 200-2 can grasp that the adjacent base station 100-1 is not in the suspension mode (M3). For example, on receiving the adjacent base station start notification signal, the broadcast information detection unit 221 searches the adjacent base station suspension recording unit 225 for an item corresponding to the cell ID that is included in the adjacent base station start notification signal. Then, the broadcast information detection unit 221 switches off the adjacent base station suspension flag that is ON in the item corresponding to the cell ID (for example, rewrites the flag is "1" to "0").

Then, thereafter, the terminal 200-2 maintains the communication mode (M13) or the standby mode (M12) intact.

Through one of the above three cases, the base station in the suspension mode (M3) restarts and can shift to the normal mode (M1).

As described above, according to the present second embodiment, the suspension mode (M3) is newly provided for the base station 100, and during the suspension mode (M1), the transmitter 112 does not operate, and thus, power consumption in the base station 100 can be reduced as compared to the normal mode (M1) in which the transmitter 112 is in operation.

Further, the station suspension mode (M14) is newly provided for the terminal 200, and during the station suspension mode (M14), broadcast information immediately before shifting to the station suspension mode (M14) is retrieved at constant time intervals. For example, the terminal 200 is configured to retrieve any one of the operator identification code, the radio communication method and the radio frequency bandwidth immediately before, or the combination thereof, at constant time intervals. Therefore, as compared to the outside coverage area mode (M11) in which the terminal 200 continuously retrieves all operator identification codes, radio communication methods and radio frequency bandwidths with which the terminal 200 is compatible, the terminal in the station suspension mode (M14) can reduce power consumption thereof.

Further, the base station 100, on shifting to the suspension mode (M3), is configured to distribute a notification that represents the shift to the suspension mode (M3) to the terminal 200 located in the coverage area of the base station 100 (for example, S35 in FIG. 8). On receiving the notification, the terminal 200 shifts to the station suspension mode (M14) without shifting to the outside coverage area mode (M11) (for example, S37 in FIG. 8). Accordingly, because the terminal 200 shifts to the station suspension mode (M14), the number of types and the frequency of broadcast information to be retrieved become smaller than in the outside coverage area mode (M11), and it is possible to reduce power consumption in the terminal 200 and extend the battery life, as compared to the case of the outside coverage area mode (M11).

Further, by shifting the terminal 200 that is located in the coverage area of the base station 100 shifted to the suspension mode (M3), to the station suspension mode (M14), it is also possible for the user of the terminal 200 to distinguish from the outside coverage area mode (M11) and determine whether or not communication is possible. For example, making the display control unit 223 display an indication representing the station suspension mode (M14) on the display unit 240 enables the user to determine whether or not communication is possible.

Further, the base station 100-1 is configured to notify the terminal 200-2, which is located in the coverage area of the adjacent base station 100-3, of the shift to the suspension mode (M3) through the adjacent base station 100-3 (for example, S36 in FIG. 8) (S36, S39). By this, if the terminal 200-2 moves to the service area of the base station 100-1 in a suspension state by handover, terminal 200-2 does not shift to the outside coverage area mode (M11) because the adjacent base station suspension flag is set ON (for example, Y in S72 in FIG. 15). Therefore, it is also possible for the terminal 200-2 to execute a handover procedure, and service quality can be maintained as compared to a case that the terminal 200-2 becomes the outside coverage area mode (M11) when moving to the service area of the base station 100-1 placed in the suspension mode (M3).

Moreover, when the terminal 200 is in the station suspension mode (M14), transmission of the common channel from the terminal 200 becomes less frequent as compared to a case when the terminal 200 is continuously in the communication mode (M13), and therefore, interference to another terminal 200 can be avoided. Then, because the terminal in the station suspension mode (M14) refrains from common channel transmission in an insensitive zone existent in the service area of the base station 100, it is also possible to avoid interference to another terminal outside the insensitive zone, for example.

### [Other embodiments]

Next, other embodiments will be described.

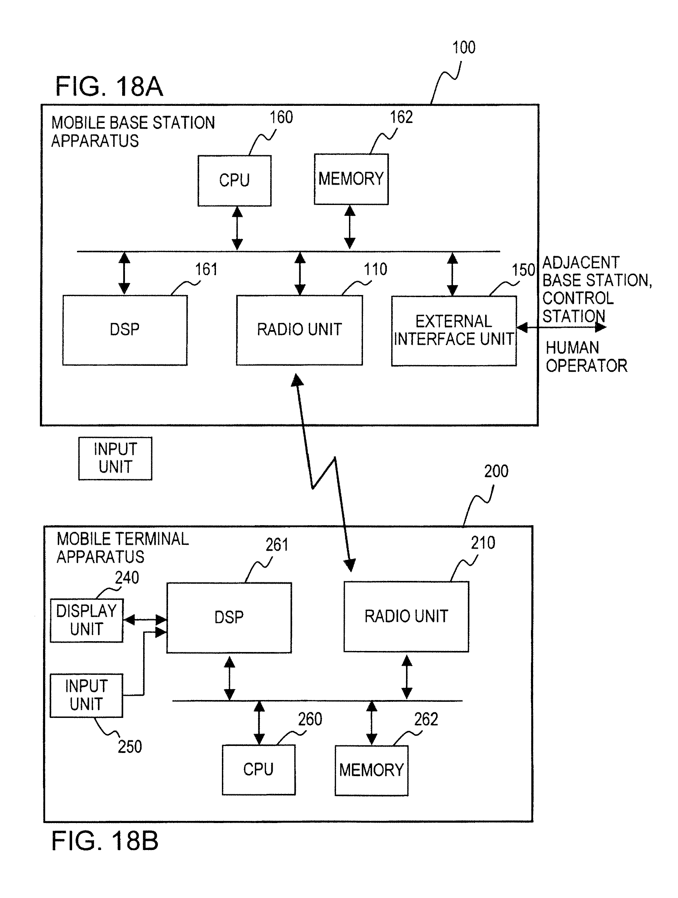

Each configuration example of the base station 100 and the terminal 200 is described in the second embodiment, with the examples of FIG. 6 and FIG. 7. Also, for example, by each configuration example illustrated in FIGS. 18A and 18B, the operation example described in the second embodiment can be performed.

As illustrated in FIG. 18A, the base station 100 further includes a CPU (Central Processing Unit) 160, a DSP (Digital Signal Processing) 161 and a memory 162. For example, the DSP 161 operates on the basis of a control signal output from the CPU 160, and can record a flag etc. by appropriately accessing the memory 162. By the operation of the DSP 161, for example, it is possible to achieve each function of the RACH signal detection unit 131, the incoming call information processing unit 133, the suspension mode shift prohibition determination unit 134, the suspension mode switching control unit 136 and the power control unit 137 in the second embodiment. From such a thing, the DSP 161 corresponds to the RACH signal detection unit 131, the incoming call information processing unit 133, the suspension mode shift prohibition determination unit 134, the suspension mode switching control unit 136 and the power control unit 137. Also, the memory 162 corresponds to the last communication time recording unit 132 and the suspension prohibition recording unit 135.

Also, as illustrated in FIG. 18B, the terminal 200 further includes a CPU 260, a DSP 261 and a memory 262. The DSP 261 operates on the basis of a control signal from the CPU 260, and can record a flag etc. by appropriately accessing the memory 262. By the operation of the DSP 261, for example, it is possible to achieve each function of the broadcast information detection unit 221, the mode switching control unit 222, the display control unit 223, the RACH signal generation unit 224 and the measurement result processing unit 226. From such a thing, the DSP 261 corresponds to the broadcast information detection unit 221, the mode switching control unit 222, the display control unit 223, the RACH signal generation unit 224 and the measurement result processing unit 226. Also, the memory 262 corresponds to the adjacent base station suspension recording unit 225.

### REFERENCE SIGNS LIST

10: Radio mobile communication system
100, 100-1 to 100-3 Radio base station apparatus (Base station)
110: Radio unit
111: Receiver
112: Transmitter
130: Control function unit
131: RACH signal detection unit
132: Last communication time recording unit
133: Incoming call information processing unit
134: Suspension mode shift prohibition determination unit
135: Suspension prohibition recording unit
136: Suspension mode switching control unit
137: Transmitter power control unit (Power control unit)
138: Broadcast information generation unit
150: External interface unit
160: CPU
161: DSP
162: Memory
170: First transmission unit
171: First mode switching control unit
200, 200-1 to 200-4: Mobile terminal apparatus (Terminal)
210: Radio unit
211: Transmitter
212: Receiver
213: Power measurement unit
220: Control function unit
221: Broadcast information detection unit
222: Mode switching control unit
223: Display control unit
224: RACH signal generation unit
225: Adjacent base station suspension recording unit
226: Measurement result processing unit
250: Input unit
260: CPU
261: DSP
262: Memory
270: Second mode switching control unit
M1: Normal mode
M2: Power OFF
M3: Suspension mode
M10: Power OFF
M11: Outside coverage area mode
M12: Standby mode
M13: Communication mode
M14: Station suspension mode

## Claims

1. A radio mobile communication system comprising:
a radio base station apparatus; and
a mobile terminal apparatus, wherein
radio communication is performed between the radio base station apparatus and the mobile terminal apparatus,
the radio base station apparatus includes:
a first transmission unit which transmits a first notification signal to notify a shift to a first mode; and
a first mode switching control unit which transmits the first notification signal and switches to the first mode in which the first transmission unit is shifted to a condition of a suspension state, and
the mobile terminal apparatus includes:
a second mode switching control unit which switches to a second mode in which power of the mobile terminal apparatus is in an ON state and power consumption is smaller than in an outside coverage area mode, on receiving the first communication signal.

2. The radio mobile communication system according to claim 1, wherein
the transmission unit transmits a second notification signal to notify the shift to the first mode to another radio base station apparatus adjacent to the radio base station apparatus.

3. The radio mobile communication system according to claim 1, wherein
the other radio base station apparatus transmits a third notification signal representing that the radio base station apparatus shifts to the first mode to the mobile terminal apparatus located in a service area of the other radio base station apparatus, on receiving the second notification signal.

4. The radio mobile communication system according to claim 1, wherein
the mobile terminal apparatus further includes a second transmission unit,
the second transmission unit transmits a restart request signal to the radio base station apparatus shifted to the first mode, and
the first mode switching control unit restarts the first transmission unit shifted to the suspension state, on receiving the restart request signal.

5. The radio mobile communication system according to claim 4, wherein
the second transmission unit transmits the restart request signal for a set number of times until reception of broadcast information from the radio base station apparatus shifted to the first mode becomes successful.

6. The radio mobile communication system according to claim 4, wherein
the second mode switching control unit switches from the second mode to an outside coverage area mode, when the second mode switching control unit does not receive broadcast information from the radio base station apparatus transmitted to the restart request signal in spite of transmission of the restart request signal from the second transmission unit for a set number of times.

7. The radio mobile communication system according to claim 4, wherein
the second transmission unit transmits the restart request signal to the radio base station apparatus, when a connection request is performed to the radio base station apparatus shifted to the first mode.

8. The radio mobile communication system according to claim 4, wherein
the second transmission unit transmits the restart request signal when the mobile terminal apparatus does not receive the communication signal and switches on power in a service area of the radio base station apparatus shifted to the first mode.

9. The radio mobile communication system according to claim 4, wherein
the second transmission unit transmits the restart request signal when the mobile terminal apparatus does not receive the communication signal and the mobile terminal apparatus performs handover to the radio base station apparatus shifted to the first mode.

10. The radio mobile communication system according to claim 9, wherein
the mobile terminal apparatus performs the handover to the radio base station apparatus shifted to the first mode, when receiving power at another radio base station apparatus to which the mobile terminal apparatus is connected becomes lower than a set power value.

11. The radio mobile communication system according to claim 9, the mobile terminal apparatus further includes a storage unit which stores a flag representing that the radio base station shifts to the first mode, on receiving from another radio base station apparatus in connection a third notification signal to notify the shift of the radio base station apparatus to the first mode.

12. The radio mobile communication system according to claim 4, wherein
the first transmission unit transmits to another radio base station apparatus a first start notification signal representing that the radio base station apparatus restarts, on restarting.

13. The radio mobile communication system according to claim 12, wherein
the other radio base station apparatus received the first start notification signal transmits to a mobile terminal apparatus located in a service area of the other radio base station apparatus a second start notification signal representing that the radio base station apparatus restarts.

14. The radio mobile communication system according to claim 1, the mobile terminal apparatus further includes a display unit, wherein
the display unit displays the second mode, when the switch to the second mode is performed.

15. The radio mobile communication system according to claim 1, wherein
the second mode switching control unit retrieves an operator identification code, a radio communication method, or a radio frequency band, without retrieving all operator identification codes, radio communication methods, and radio frequency bands with which the mobile terminal apparatus is adaptable, when the switch to the second mode is performed.

16. The radio mobile communication system according to claim 1, wherein
the second mode switching control unit switches from the second mode to a standby mode, when the second mode switching control unit receive broadcast information from the radio base station apparatus without transmitting a restart request signal from the second transmission unit to the radio base station apparatus shifted to the first mode.

17. A radio base station apparatus for performing radio communication with a mobile terminal apparatus, the radio base station apparatus comprising:
a first transmission unit which transmits a first notification signal to notify a shift to a first mode; and
a first mode switching control unit which switches to the first mode in which the first transmission unit is shifted to a suspension state, after transmission of the first notification signal, wherein
the mobile terminal apparatus switches to a second mode in which power of the mobile terminal apparatus is in an ON state and power consumption is smaller than in an outside coverage area mode, on receiving the communication signal.

18. A mobile terminal apparatus for performing radio communication with a radio base station apparatus, the mobile terminal apparatus comprising:
a receiver unit which receives a first notification signal to notify a shift to a first mode in which a transmission unit of the radio base station apparatus is shifted to a suspension state; and
a second mode switching control unit which switches to a second mode in which power of the mobile terminal apparatus is in an ON state and power consumption is smaller than in an outside coverage area mode, on receiving the first communication signal.

19. A radio communication method in a radio mobile communication system for performing radio communication between a radio base station apparatus and a mobile terminal apparatus, the method comprising:
transmitting a first notification signal to notify a shift to a first mode, by a first transmission unit of the radio base station apparatus, and switching to the first mode in which the first transmission unit is shifted to a suspension state, by a first mode switching control unit of the radio base station apparatus; and
switching to a second mode in which power of the mobile terminal apparatus is in an ON state and power consumption is smaller than in an outside coverage area mode, on receiving the first communication signal, by a second mode switching control unit of the mobile terminal apparatus.
